# FASCICULE DE BREVET EUROPEEN

(11) **EP 2 953 291 B1**
(45) Date de publication et mention de la délivrance du brevet: **20.11.2019**
(21) Numéro de dépôt: 15169132.6
(22) Date de dépôt: 26.05.2015
(51) Int. Cl.: H04L 9/08, H04L 9/32

(54) **STOCKAGE DISTRIBUE SECURISE PAR CALCUL MULTIPARTITE**
GESICHERTE VERTEILTE SPEICHERUNG DURCH MEHRPARTEIENBERECHNUNG
SECURED DISTRIBUTED STORAGE BY MULTIPARTY CALCULATION

(30) Priorité: 03.06.2014 FR 1455041
(43) Date de publication de la demande: 09.12.2015
(73) Titulaire: Idemia Identity & Security France, 92400 Courbevoie (FR)
(72) Inventeur: PATEY, Alain, 92130 ISSY LES MOULINEAUX (FR); CHABANNE, Hervé, 92130 ISSY LES MOULINEAUX (FR); BRINGER, Julien, 92130 ISSY LES MOULINEAUX (FR)
(74) Mandataire: Plasseraud IP

(56) Documents cités:
- WO-A2-2008/127309
- FR-A1- 2 984 559
- Alain Patey: "Techniques cryptographiques pour l'authentifiication et l'identification biométriques respectant la vie privée", , 20 mai 2014 (2014-05-20), XP055202769, Extrait de l'Internet: URL:http://perso.telecom-paristech.fr/~pat ey/documents/these.pdf [extrait le 2015-07-16]
- JONATHAN L DAUTRICH ET AL: "Security Limitations of Using Secret Sharing for Data Outsourcing", 11 juillet 2012 (2012-07-11), DATA AND APPLICATIONS SECURITY AND PRIVACY XXVI, SPRINGER BERLIN HEIDELBERG, BERLIN, HEIDELBERG, PAGE(S) 145 - 160, XP047009070, ISBN: 978-3-642-31539-8 * alinéa [0002] *
- Sonali Patil ET AL: "SECRET SHARING SCHEMES FOR SECURE BIOMETRIC AUTHENTICATION", International Journal of Scientific & Engineering Research, 6 juin 2013 (2013-06-06), XP055173855, Extrait de l'Internet: URL:http://www.ijser.org/researchpaper/SEC RET-SHARING-SCHEMES-FOR-SECURE-BIOMETRIC-A UTHENTICATION.pdf [extrait le 2015-03-04]
- Neyire D. Sarier: "Biometric Cryptosystems: Authentication, Encryption and Signature for Biometric Identities", , 1 janvier 2011 (2011-01-01), pages 1-242, XP055102827, Extrait de l'Internet: URL:http://d-nb.info/1044870044/34 [extrait le 2014-02-18]

## Description

L'invention concerne le domaine du stockage distribué de données confidentielles, et de l'accès ultérieur aux données confidentielles ainsi stockées.

L'invention se rapporte notamment à la situation dans laquelle les données confidentielles sont des données biométriques, et dans laquelle l'accès ultérieur vise à vérifier si une donnée biométrique candidate correspond à l'une des données biométriques stockées de façon distribuée.

Un stockage distribué est susceptible d'être avantageux pour de nombreuses raisons. Par exemple, il existe des solutions de stockage très fiables et à très bas coût dans le Cloud (parfois dénommé « nuage » en français), et il peut s'avérer économiquement utile de stocker des données confidentielles sur des serveurs d'un Cloud. Le fait de distribuer les données confidentielles est susceptible de permettre notamment d'augmenter leur disponibilité. Ainsi, si les données confidentielles sont stockées de façon redondante, la perte ou l'indisponibilité temporaire d'un des serveurs utilisés ne compromet pas (grâce aux informations redondantes disponibles par ailleurs) l'accès aux données confidentielles.

Cependant, les données confidentielles sont, par définition, confidentielles, alors que les solutions de stockage distribué (que ce soit dans le Cloud ou ailleurs, y compris en interne dans une entreprise) sont souvent peu sécurisées. Des tiers (hackers, gouvernement ou gouvernements étrangers, sous traitants du fournisseur de stockage distribué, fournisseur du stockage distribué lui-même, employés de l'entité utilisatrice en cas de stockage distribué interne à l'entité utilisatrice, etc.) sont ainsi susceptibles d'accéder aux données stockées sans autorisation.

Il est donc utile de protéger l'accès à ces données, mais les solutions connues rendent l'accès beaucoup plus long et sont donc pénalisantes.

Les documents ALAIN PATEY: "Techniques cryptographiques pour l'authentifiication et l'identification biométriques respectant la vie privée", 20 May 2014, et, WO2008127309 A2 20081023 [IY] (BELLARE MIHIR [US], et al), représentent l'état de l'art.

L'invention vise donc à améliorer la situation.

L'invention est définie par les revendications indépendantes 1, 2, 7, 8, 11 et 12.

Un aspect de l'invention concerne un procédé de stockage distribué sécurisé, sur N serveurs, de données confidentielles, le procédé comprenant :
/a/ une obtention, par un circuit électronique d'obtention d'un dispositif d'enregistrement, d'une donnée confidentielle,
/b/ une obtention, par un circuit électronique d'extraction du dispositif d'enregistrement, d'une représentation courte approximée de la donnée confidentielle à partir de ladite donnée confidentielle,
/c/ une obtention, par un circuit électronique de partage du dispositif d'enregistrement, de N parts de la donnée confidentielle avec un seuil t tel qu'au moins t parts soient nécessaires pour reconstituer la donnée confidentielle, et de N parts courtes de la représentation courte approximée avec un seuil t tel qu'au moins t parts courtes soient nécessaires pour reconstituer la représentation courte approximée,
/d/ une transmission, par un émetteur du dispositif d'enregistrement, de chacune de ces N parts et de chacune de ces N parts courtes à un serveur respectif parmi les N serveurs, afin de les y stocker.

Ce procédé est avantageux en ce qu'il permet de stocker la donnée confidentielle de manière sécurisée, c'est-à-dire sans que l'un quelconque des serveurs ne puisse y accéder ou la reconstituer à partir des informations auxquelles il a accès, même combinées avec les informations auxquelles au plus t-2 autres serveurs (parmi les N serveurs) ont accès.

Ce procédé est également avantageux en ce qu'il stocke, pour chaque part de la donnée confidentielle, une part courte associée, qui permet une identification plus rapide des données confidentielles stockées de manière distribuée lors d'un procédé visant à accéder à de telles données confidentielles.

Un autre aspect de l'invention concerne un procédé d'accès sécurisé, par un dispositif d'accès, à des données confidentielles stockées de manière distribuée et sécurisée sur N serveurs, le procédé comprenant :
/e/ une obtention, par un circuit électronique de partage du dispositif d'accès, de N parts courtes d'une représentation courte approximée d'une donnée confidentielle à laquelle un accès est souhaité, avec un seuil t tel qu'au moins t parts courtes soient nécessaires pour reconstituer la représentation courte approximée,
/f/ une transmission, par un émetteur du dispositif d'accès, de chacune de ces N parts courtes à un serveur respectif parmi les N serveurs,
/g/ un calcul distribué, par des circuits de calcul des N serveurs, des parts des distances entre la représentation courte approximée et chacune des K représentations courtes approximées stockées de façon distribuée sur les N serveurs,
/h/ une transmission, par un émetteur de chaque serveur utilisé, à un récepteur du dispositif d'accès, des parts correspondant aux représentations courtes dont la distance à la représentation courte approximée est inférieure à un seuil déterminé,
/i/ une obtention, par un circuit électronique d'obtention du dispositif d'accès, à partir des parts reçues à l'étape précédente, des données confidentielles correspondantes.

Ce procédé est avantageux notamment en ce qu'il permet une identification rapide mais néanmoins sécurisée des données confidentielles stockées de manière distribuée. L'identification rapide résulte notamment du recours à des représentations courtes approximées.

En ce qui concerne les performances (rapidité, bande passante utilisée, etc.), le dispositif d'accès n'a pas besoin de télécharger toute la base de données que constitue l'ensemble de K*N parts des K données confidentielles stockées de façon distribuée sur les N serveurs, et peut effectuer une recherche sur un nombre beaucoup plus restreint et pertinent de données confidentielles. Le dispositif d'accès peut à cette fin mettre en place un algorithme d'identification très élaboré (choisi parmi les plus performants mais donc souvent les plus complexes de l'état de l'art) qui aurait un coût trop lourd (en calculs et/ou en bande passante) s'il était effectué au niveau des parts.

Le recours à un filtrage par calcul de distance (par exemple une distance de Hamming) a un coût calculatoire très faible et un coût en bande passante peu élevé. Ainsi, selon une implémentation possible, les représentations courtes approximées occupent 32 octets chacune, et chaque serveur ne doit envoyer à chaque autre serveur que 290 octets par donnée confidentielle stockée de façon distribuée.

Un autre aspect de l'invention concerne un dispositif d'enregistrement pour stockage distribué sécurisé, sur N serveurs, de données confidentielles, le dispositif d'enregistrement étant agencé pour mettre en œuvre un procédé de stockage distribué sécurisé selon un aspect de l'invention.

Un autre aspect de l'invention concerne un système d'accès sécurisé, par un dispositif d'accès, à des données confidentielles stockées de manière distribuée et sécurisée sur N serveurs, le système d'accès sécurisé comprenant le dispositif d'accès et les N serveurs. Le système d'accès sécurisé est agencé pour mettre en œuvre un procédé d'accès sécurisé selon un aspect de l'invention.

Un autre aspect de l'invention concerne un programme d'ordinateur comprenant une suite d'instructions qui, lorsqu'elles sont exécutées par un processeur, conduisent le processeur à mettre en œuvre un procédé selon un aspect de l'invention.

Un autre aspect de l'invention concerne un support de stockage non transitoire lisible par ordinateur, ledit support stockant un programme d'ordinateur selon un aspect de l'invention.

D'autres aspects, buts et avantages de l'invention apparaîtront à la lecture de la description de quelques uns de ses modes de réalisation.

L'invention sera également mieux comprise à l'aide des dessins, sur lesquels :
- la figure 1 illustre un système selon un mode de réalisation possible de l'invention ;

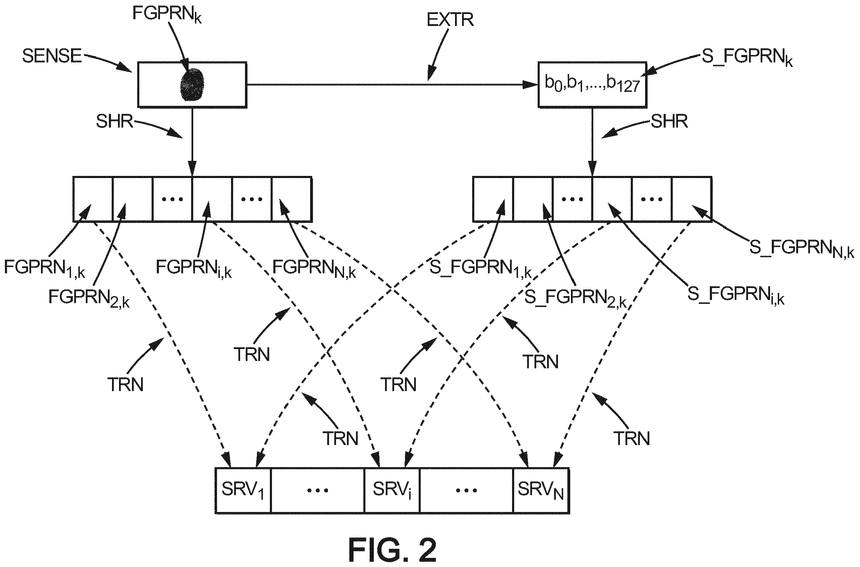

- la figure 2 illustre un procédé de stockage distribué selon un mode de réalisation possible de l'invention ;

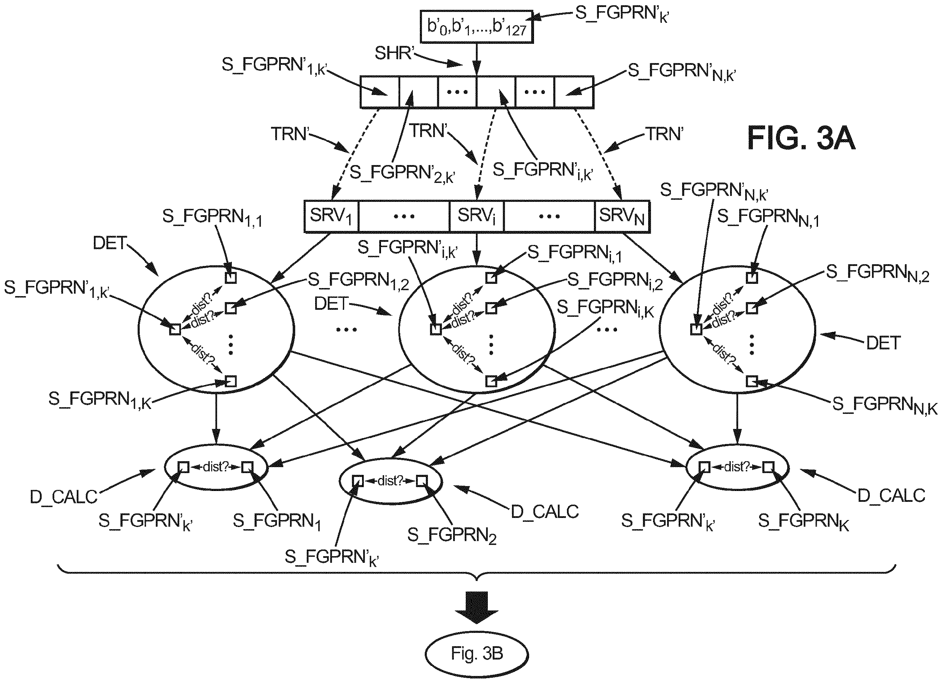

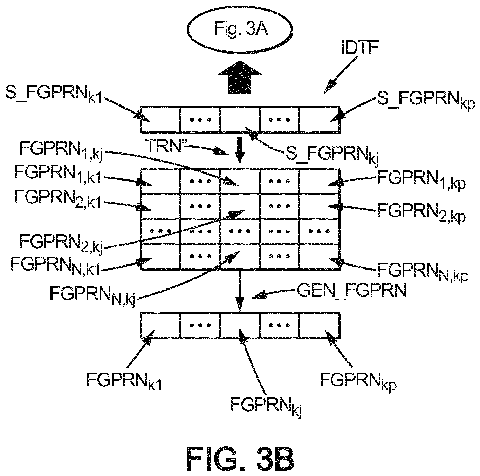

- la figure 3 (divisée en une figure 3A et une figure 3B) illustre un procédé d'accès sécurisé selon un mode de réalisation possible de l'invention.

Selon un premier mode de réalisation, un procédé de stockage distribué sécurisé, sur N serveurs SRV₁, ... SRVᵢ, ... SRV_{N}, de données confidentielles, comprend une obtention SENSE, par un circuit électronique d'obtention BIO_SENSOR d'un dispositif d'enregistrement ENR_STAT, d'une donnée confidentielle FGPRNₖ. Les données sont confidentielles en ce qu'elles ne sont pas censées être connues d'un (ou déterminables par un) quelconque des N serveurs (pris individuellement) ni d'aucune entité tierce non autorisée.

Selon une mise en œuvre possible, les serveurs sont des serveurs physiques de tout type approprié.

Chaque donnée confidentielle est, selon une mise en œuvre possible, une donnée biométrique (par exemple une empreinte digitale, une capture d'iris, ou encore une image de visage), voire une combinaison de plusieurs données biométriques (visage plus empreinte digitale, ou plusieurs empreintes digitales correspondant à différents doigts d'un même individu, ou encore empreinte digitale plus iris). Selon une mise en œuvre possible, la donnée confidentielle est un IrisCode de 512 octets, tel que décrit notamment dans John Daugman, "How iris récognition works", IEEE Trans. Circuits Syst. Video Techn. (TCSV) 14(1):21-30 (2004).

Selon une autre mise en œuvre, les données confidentielles sont des documents, par exemple des photographies, ou des documents de type texte.

Le dispositif d'enregistrement ENR_STAT peut être d'un seul tenant ou comprendre plusieurs modules séparés (le circuit électronique d'obtention BIO_SENSOR peut ainsi être intégré ou au contraire constituer un module distinct connecté à un autre module du dispositif d'enregistrement ENR_STAT). Selon une mise en œuvre possible, le dispositif d'enregistrement ENR_STAT est une station d'enrôlement biométrique (qui peut être par exemple un dispositif électronique dédié, pouvant prendre la forme d'un kiosque, ou encore un ordinateur conventionnel convenablement programmé). Le circuit électronique d'obtention est un capteur biométrique BIO_SENSOR. L'obtention SENSE comprend alors l'obtention d'une donnée confidentielle consistant en une donnée biométrique telle qu'une empreinte digitale FGPRNₖ.

Selon une autre mise en œuvre, le dispositif d'enregistrement est un ordinateur personnel, par exemple un ordinateur portable ou de bureau, une tablette, un smartphone (parfois appelé téléphone portable intelligent en français), ou encore une carte à puce. Le circuit électronique d'obtention est alors un processeur de l'ordinateur personnel, couplé à une mémoire stockant un programme d'ordinateur permettant à un utilisateur de sélectionner un document parmi les documents stockés sur l'ordinateur personnel. L'obtention comprend alors l'obtention d'une donnée confidentielle consistant en un document sélectionné (qui a pu être préalablement créé sur ce même ordinateur personnel ou y être chargé).

Le procédé selon le premier mode de réalisation comprend une obtention EXTR, par un circuit électronique d'extraction EXTR_C du dispositif d'enregistrement ENR_STAT, d'une représentation courte approximée S_FGPRNₖ de la donnée confidentielle FGPRNₖ à partir de ladite donnée confidentielle FGPRNₖ.

Le circuit électronique d'extraction EXTR_C est par exemple un circuit électronique dédié tel qu'un FPGA, un ASIC, un PAL (ou tout autre composant électronique configurable), voire un composant électronique complètement sur mesure. Selon une autre mise en œuvre possible, le circuit électronique d'extraction comprend à la fois un processeur et une mémoire associée (par exemple de type RAM, EEPROM, Flash, ROM, mémoire magnétique, mémoire optique, etc.), la mémoire associée stockant un programme apte (lorsqu'il est exécuté par le processeur) à extraire une représentation courte approximée S_FGPRNₖ de la donnée confidentielle FGPRNₖ à partir de ladite donnée confidentielle FGPRNₖ.

Selon une mise en œuvre possible, la donnée confidentielle est un document, et la représentation courte approximée est une indexation de ce document, par exemple une liste d'éléments pertinents extraits de ce document. Selon une mise en œuvre possible, la donnée confidentielle est un document texte et l'indexation est une liste de mots clés les plus fréquents apparaissant dans le document texte (ou une liste de mots sélectionnés selon des règles plus élaborées que la seule fréquence d'apparition). Ces mots clés peuvent être représentés chacun par un condensat (par exemple par application d'une fonction de hachage cryptographique telle que SHA-1), ou par n'importe quelle valeur arbitraire plus facile à manipuler que le mot clé lui-même (dont la longueur est susceptible d'être plus importante et variable). Selon une mise en œuvre possible, la donnée confidentielle est une photographie et l'indexation s'appuie sur une reconnaissance de forme par un circuit électronique approprié. Par exemple, si un visage humain, une automobile, un arbre et/ou une maison sont détectés dans la photographie, l'indexation peut comprendre une liste d'identifiants des différents éléments détectés tels que 0x0001 pour un visage humain, 0x0002 pour une automobile, 0x0003 pour un arbre et 0x0004 pour une maison.

Selon une mise en œuvre possible, la donnée confidentielle est une donnée biométrique (par exemple une empreinte digitale). L'obtention EXTR d'une représentation courte approximée S_FGPRNₖ de la donnée biométrique FGPRNₖ à partir de ladite donnée biométrique FGPRNₖ consiste à extraire une chaîne courte binaire. De manière similaire, dans le cas où la donnée confidentielle est par exemple une donnée biométrique représentant un iris, l'obtention de la représentation courte approximée consiste par exemple à extraire un ensemble de 128 bits des encodages d'iris (IrisCodes) parmi ceux situés dans les parties les moins souvent masquées de l'iris (ainsi que c'est décrit par exemple dans Julien Bringer, Mélanie Favre, Hervé Chabanne, and Alain Patey, Faster secure computation for biometric identification using filtering, In Anil K. Jain, Arun Ross, Salil Prabhakar, and Jaihie Kim, editors, ICB, pages 257-264. IEEE, 2012). Il est ainsi possible d'extraire des bits correspondant à des pixels éloignés des paupières et des cils pour qu'en général ce ne soit pas une donnée perturbée, pixels qui de préférence sont choisis de manière à ne pas être trop proches afin d'éviter qu'ils soient trop corrélés (pour qu'ils soient davantage discriminants).

Le procédé selon le premier mode de réalisation comprend une obtention SHR, par un circuit électronique de partage SHR_C du dispositif d'enregistrement ENR_STAT, de N parts FGPRN_{1,k}, FGPRN_{2,k}, ... FGPRN_{i,k}, ... FGPRN_{N,k} de la donnée confidentielle FGPRNₖ avec un seuil t tel qu'au moins t parts soient nécessaires pour reconstituer la donnée confidentielle FGPRNₖ. L'obtention SHR intègre également une obtention, par le circuit électronique de partage SHR_C, de N parts courtes S_FGPRN_{1,k}, S_FGPRN_{2,k}, ... S_FGPRN_{i,k}, ... S_FGPRN_{N,k} de la représentation courte approximée S_FGPRNₖ avec un seuil t tel qu'au moins t parts courtes soient nécessaires pour reconstituer la représentation courte approximée S_FGPRNₖ.

Le circuit électronique de partage SHR_C est par exemple un circuit électronique dédié tel qu'un FPGA, un ASIC, un PAL (ou tout autre composant électronique configurable), voire un composant électronique complètement sur mesure. Selon une autre mise en œuvre possible, le circuit électronique de partage comprend à la fois un processeur et une mémoire associée (par exemple de type RAM, EEPROM, Flash, ROM, mémoire magnétique, mémoire optique, etc.), la mémoire associée stockant un programme apte (lorsqu'il est exécuté par le processeur) à partager la donnée confidentielle FGPRNₖ en N parts et à partager la représentation courte approximée S_FGPRNₖ en N parts courtes.

Le circuit électronique de partage SHR_C met ainsi en œuvre une technique dite de partage de secret, permettant de protéger ce secret (les données confidentielles). Ainsi, un seul serveur (ou quelques-uns) ne peut (peuvent) rien apprendre sur les données confidentielles à partir des éléments dont il(s) dispose(nt) lui-même (eux-mêmes), tandis que si le nombre de serveurs se réunissant dépasse un certain seuil (au moins t serveurs), ces serveurs peuvent totalement reconstituer les données confidentielles qui étaient partagées. Cette technique permet de protéger les données en cas d'accès d'un attaquant à un (ou quelques-uns, moins que le seuil) des serveurs, cet attaquant ne pouvant alors pas découvrir les données confidentielles en exploitant les données présentes sur les serveurs attaqués.

Dans ce contexte, il est possible, en utilisant des protocoles dits de calcul sécurisé multipartite (connus sous l'acronyme SMC ou secure multi-party computation en anglais, ou encore sous l'acronyme MPC), de faire des calculs sur les données ainsi partagées. Selon les types de calculs, les serveurs peuvent effectuer ces calculs localement sur les données ou avoir besoin d'interagir avec les autres serveurs. Les résultats obtenus par les serveurs sont alors des parts du résultat effectif auquel les serveurs n'accèdent pas tant qu'ils ne mettent pas leurs parts en commun, à l'instar des données initiales.

Un schéma de partage de secret possible est celui décrit dans Adi Shamir, How to share a secret, Commun. ACM, 22(11) :612-613, 1979. Ce schéma s'appuie sur l'évaluation et l'interpolation de polynômes. On suppose que les données que le client souhaite partager appartiennent à un corps fini Fq de caractéristique p. On affecte à chacun des serveurs SRVᵢ un élément ui appartenant à Fq, de sorte que tous les éléments ui soient distincts et non nuls. Les points ui sont publics. Pour simplifier, on peut par exemple poser ui=i pour i=1...N. Le partage d'une donnée x par le dispositif d'enregistrement ENR_STAT s'effectue de la façon suivante. Le dispositif d'enregistrement ENR_STAT (plus précisément, son circuit électronique de partage SHR_C) choisit aléatoirement un polynôme P de degré t-1 sur Fq tel que P(0)=x. Le dispositif d'enregistrement ENR_STAT calcule les parts xi=P(ui), pour i=1...N. Chaque xi représente ainsi une part de x. D'autres schémas de partage sont évidemment possibles.

Le procédé selon le premier mode de réalisation comprend une transmission TRN, par un émetteur XMIT du dispositif d'enregistrement ENR_STAT, de chacune (FGPRN_{i,k}) de ces N parts FGPRN_{i,k}, FGPRN_{2,k}, ... FGPRN_{i,k}, ... FGPRN_{N,k} et de chacune (S_FGPRN_{i,k}) de ces N parts courtes S_FGPRN_{i,k}, S_FGPRN_{2,k}, ... S_FGPRN_{i,k}, ... S_FGPRN_{N,k} à un serveur respectif SRVᵢ parmi les N serveurs SRVᵢ, ... SRVᵢ, ... SRV_{N}, afin de les y stocker.

A l'issue du procédé, on obtient ainsi un stockage distribué sur N serveurs. En réitérant le procédé K fois pour K données confidentielles différentes, le procédé permet évidemment de stocker K données confidentielles.

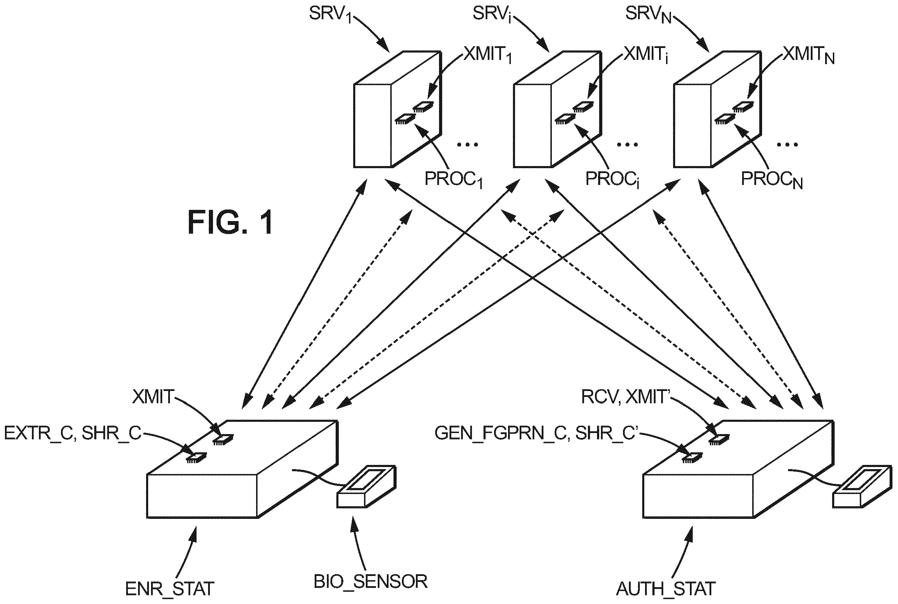

Sur la figure 1, le circuit électronique de partage SHR_C et le circuit électronique d'extraction EXTR_C sont intégrés à un seul et même circuit contenant un processeur (partagé) et une mémoire stockant un programme pour la mise en œuvre des fonctions de partage et un programme pour la mise en œuvre des fonctions d'extraction. Cependant, les deux circuits peuvent également être complètement distincts.

Un deuxième mode de réalisation concerne un procédé d'accès sécurisé, par un dispositif d'accès AUTH_STAT, à des données confidentielles stockées de manière distribuée et sécurisée sur N serveurs SRVᵢ, ... SRVᵢ, ... SRV_{N}.

Selon une mise en œuvre possible, les données confidentielles stockées de manière distribuée et sécurisée sur les N serveurs SRV₁, ... SRVᵢ, ... SRV_{N} le sont selon un procédé selon le premier mode de réalisation, ou selon tout procédé apte à initialiser les N serveurs de la même façon qu'un procédé selon le premier mode de réalisation.

Selon une mise en œuvre possible, le dispositif d'accès AUTH_STAT est une station d'authentification (pouvant prendre la forme d'un dispositif électronique dédié, ou d'un ordinateur conventionnel convenablement programmé et équipé d'un capteur biométrique). Un utilisateur souhaitant s'authentifier se présente à la station d'authentification. Le procédé effectue une capture biométrique sur l'utilisateur. Cette capture peut s'effectuer de manière similaire à celle de l'étape d'obtention SENSE du procédé d'enrôlement correspondant. Cette capture biométrique est censée correspondre à une empreinte biométrique de l'utilisateur que l'utilisateur a capturée préalablement lors d'une phase d'enrôlement, ayant conduit au stockage distribué de cette empreinte biométrique préalable sur les N serveurs. C'est du moins ce que le procédé d'accès sécurisé vise à établir. Le procédé effectue alors une extraction d'une représentation courte approximée (qualifiée ci-dessous de première représentation courte approximée) correspondant à l'empreinte biométrique captée.

Selon une autre mise en œuvre possible, le dispositif d'accès est un ordinateur personnel, par exemple un ordinateur portable ou de bureau, une tablette, un smartphone (parfois appelé téléphone portable intelligent en français), ou encore une carte à puce. Un utilisateur souhaite rechercher, à partir du dispositif d'accès, un document confidentiel stocké de manière distribuée sur les N serveurs sur la base d'une indexation donnée. Le procédé selon le deuxième mode de réalisation procède à une saisie d'une représentation courte approximée (par exemple, une indexation) correspondant à la donnée confidentielle recherchée. Cette représentation courte approximée est qualifiée ci-dessous de deuxième représentation courte approximée. L'indexation est par exemple une série de mots clés saisis librement par l'utilisateur (par exemple à l'aide d'un clavier) ou choisis dans une liste de mots clés, ou (de façon plus facile à manipuler lors d'une mesure de distance), une série de condensats obtenus à partir de chacun de ces mots clés (par exemple des condensats calculés à l'aide d'un algorithme de hachage cryptographique tel que SHA-1 ou tout autre algorithme de hachage cryptographique approprié), ou encore une série de pointeurs ou index ou autres valeurs numériques associés chacun à l'un des mots clés. L'indexation utilisée lors des procédés d'enregistrement distribué et d'accès sécurisé est du même type (pour que l'identification sur la base de l'indexation soit susceptible de fonctionner), c'est-à-dire que deux données confidentielles identiques utilisées lors de l'enregistrement (d'une part) et de l'accès sécurisé (d'autre part) ont les mêmes représentations courtes approximées.

Selon une mise en œuvre possible, le dispositif d'accès AUTH_STAT et le dispositif d'enregistrement ENR_STAT sont intégrés au sein d'un seul et même dispositif. Selon une autre mise en œuvre, il s'agit de dispositifs distincts, voire de dispositifs de types distincts.

Un procédé selon le deuxième mode de réalisation comprend une obtention SHR', par un circuit électronique de partage SHR_C' (de type similaire au circuit électronique de partage SHR_C précédemment décrit, voire identique) du dispositif d'accès AUTH_STAT de N parts courtes S_FGPRN'_{1,k'}, S_FGPRN'_{2,k'}, ... S_FGPRN'_{i,k'}, ... S_FGPRN'_{N,k'} d'une représentation courte approximée S_FGPRN'_{k'} d'une donnée confidentielle à laquelle un accès est souhaité, avec un seuil t tel qu'au moins t parts courtes soient nécessaires pour reconstituer la représentation courte approximée S_FGPRN'ₖ. La représentation courte approximée S_FGPRN'ₖ correspond par exemple à une représentation courte approximée d'empreinte digitale. Il peut s'agir plus généralement de la première représentation courte approximée précitée, ou encore de la deuxième représentation courte approximée précitée.

Un procédé selon le deuxième mode de réalisation comprend une transmission TRN', par un émetteur XMIT' du dispositif d'accès AUTH_STAT, de chacune (S_FGPRN'_{i,k'}) de ces N parts courtes S_FGPRN'_{i,k'}, S_FGPRN'_{2,k'}, ... S_FGPRN'_{i,k'}, ... S_FGPRN'_{N,k'} à un serveur respectif SRVᵢ parmi les N serveurs SRVᵢ, ... SRVᵢ, ... SRV_{N}. Chaque serveur SRVᵢ reçoit ainsi une part courte dont il est censé rechercher une ou plusieurs part(s) courte(s) potentiellement correspondante(s) parmi celles qu'il a stockées.

Selon une mise en œuvre possible, un procédé selon le deuxième mode de réalisation comprend une détermination DET, au moins partiellement locale à chaque serveur SRVᵢ, par un circuit de calcul PROCᵢ de chaque serveur SRVᵢ, de K distances mesurées entre la part courte S_FGPRN'_{i,k'} reçue par ce serveur SRVᵢ et K parts courtes S_FGPRN_{i,1}, S_FGPRN_{i,2}, ... S_FGPRN_{i,K} que ce serveur SRVᵢ a préalablement stockées. Une sécurité accrue résulte notamment de la détermination au moins partiellement locale à chaque serveur des distances pertinentes, ce qui signifie que les informations détenues par chaque serveur ne sont pas (en tout cas pas intégralement) partagées avec d'autres serveurs, ce qui réduit ainsi les risques d'attaques. Plus précisément, en ce qui concerne la sécurité, grâce au procédé proposé, les serveurs n'ont jamais individuellement accès en clair aux données confidentielles d'autres serveurs, ni même aux représentations courtes approximées correspondantes, mais uniquement à des distances, correspondant à des scores de filtrage. Seul le dispositif d'accès a, en fin de procédé, accès à des données confidentielles.

Selon une mise en œuvre possible, les parts courtes sont associées à une donnée confidentielle comprenant plusieurs empreintes biométriques. Chaque part courte comprend, selon une mise en œuvre possible, plusieurs sous parts courtes. Selon une mise en œuvre possible, la mesure de distance (s'analysant comme une mesure de similarité calculée afin de filtrer les données stockées de façon distribuée et d'identifier ainsi les plus pertinentes) est pour chaque part courte une série de mesure de distances (pour chacune des sous parts, associées à des empreintes biométriques distinctes), suivie d'une combinaison de ces mesures (par exemple : somme, somme des carrés, maximum/minimum, etc.). Selon une mise en œuvre possible, le procédé d'accès est agencé pour que les serveurs ne révèlent pas les résultats intermédiaires (mesure de distances avant leur combinaison), mais uniquement le résultat de la combinaison.

Le circuit électronique de calcul PROCᵢ est par exemple un circuit électronique dédié tel qu'un FPGA, un ASIC, un PAL (ou tout autre composant électronique configurable), voire un composant électronique complètement sur mesure. Selon une autre mise en œuvre possible, le circuit électronique de calcul comprend à la fois un processeur et une mémoire associée (par exemple de type RAM, EEPROM, Flash, ROM, mémoire magnétique, mémoire optique, etc.), la mémoire associée stockant un programme apte (lorsqu'il est exécuté par le processeur) à calculer la distance pertinente (le cas échéant en faisant appel à d'autres serveurs parmi les N serveurs).

Le fait que la détermination soit au moins partiellement locale signifie que cette détermination implique notamment l'utilisation de données sensibles qui sont locales (à savoir qui sont stockées directement dans le serveur SRVᵢ, et ne quittent pas le serveur SRVᵢ, préservant ainsi la confidentialité de son contenu vis-à-vis d'entités tierces telles que d'autres serveurs). Des données sont sensibles si l'accès à ces données est susceptible (éventuellement en combinaison avec l'accès à d'autres données) de permettre de révéler une donnée confidentielle.

Le circuit électronique de calcul PROCᵢ détermine ainsi la distance de la part courte soumise à chacune des parts courtes stockées dans le serveur SRVᵢ, ce qui permet d'effectuer un filtre sur la base du critère de distance (distance de Hamming, autre distance euclidienne, produit scalaire, etc.).

Un procédé selon le deuxième mode de réalisation comprend un calcul distribué, par des circuits de calcul PROC₁, ... PROCᵢ, ... PROC_{N} (de type précité) des N serveurs SRV₁, ... SRVᵢ, ... SRV_{N}, des distances (en réalité, des parts des distances) entre la représentation courte approximée S_FGPRN'_{k'} et chacune des K représentations courtes approximées S_FGPRN₁, S_FGPRN₂, ... S_FGPRN_{K} stockées de façon distribuée sur les N serveurs SRV₁, ... SRVᵢ, ... SRV_{N}. Par exemple, les distances entre la représentation courte approximée S_FGPRN'_{k'} et chacune des K représentations courtes approximées S_FGPRN₁, S_FGPRN₂, ... S_FGPRN_{K} sont calculées sur la base des N*K parts de distances mesurées à l'étape optionnelle précédente (détermination DET). Ainsi, sur la base des parts de distances entre les parts courtes composant les représentations courtes approximées, le procédé est en mesure de déterminer la distance entre les représentations courtes approximées. Cette étape de calcul distribué ne nécessite de partager entre les serveurs que des informations relatives à des distances (par exemple la distance entre les représentations courtes approximées), et non directement des informations stockées dans ces serveurs. Ceci limite ainsi la fuite d'informations exploitables par des attaquants potentiels. Par exemple, selon une mise en œuvre possible, la distance de deux représentations courtes approximées est définie comme la somme des distances des parts respectives de ces deux représentations courtes approximées. Selon une mise en œuvre possible, le calcul distribué consiste à transmettre toutes les parts de distances entre parts (détenues chacune par un serveur respectif) à une entité (par exemple le dispositif d'accès AUTH_STAT) qui les additionne toutes ensemble et renvoie le résultat à chaque serveur. Selon une autre mise en œuvre possible, les serveurs SRVᵢ s'échangent les parts de distances entre parts qu'ils ont calculées pour que chacun puisse déterminer la distance (des deux représentations courtes approximées) en résultant.

Selon une mise en œuvre possible, la mesure de parts de distance entre parts courtes est sécurisée selon le protocole décrit dans Takashi Nishide and Kazuo Ohta, Multiparty computation for interval, equality, and comparison without bit-decomposition protocol, In Tatsuaki Okamoto and Xiaoyun Wang, editors, Public Key Cryptography, volume 4450 de Lecture Notes in Computer Science, pages 343-360, Springer, 2007. En particulier, ce protocole peut être utilisé après avoir calculé les parts des distances. Au lieu de réunir les parts et de regarder quelles distances sont suffisamment faibles, il est ainsi possible de continuer de faire des calculs sécurisés sur les parts, qui dévoilent tout au plus l'information selon laquelle la distance entre les représentations courtes est (ou non) inférieure ou égale au seuil.

Un procédé selon le deuxième mode de réalisation comprend une transmission TRN" (se décomposant en p*NN transmissions de parts, NN étant compris entre t et N, la valeur NN=N étant avantageuse), par un émetteur XMITᵢ de chaque serveur SRVᵢ utilisé (soit entre t et N serveurs pour chaque donnée confidentielle), à un récepteur RCV du dispositif d'accès AUTH_STAT, des parts FGPRN_{i,k1}, ... FGPRN_{i,kj}, ... FGPRN_{i,kp} correspondant aux représentations courtes S_FGPRNₖ₁, ... S_FGPRNₖⱼ, ... S_FGPRNₖₚ dont la distance à la représentation courte approximée S_FGPRN'_{k'} est inférieure (ou égale) à un seuil déterminé. Les p parts FGPRN_{i,k1}, ... FGPRN_{i,kj}, ... FGPRN_{i,kp} correspondent aux représentations courtes S_FGPRNₖ₁, ... S_FGPRNₖⱼ, ... S_FGPRNₖₚ au sens où chacune de ces p parts est utilisable (en combinaison avec au moins t-1 autres parts correspondant à t-1 indices i différents) pour reconstituer les données confidentielles respectives FGPRNₖ₁, ... FGPRNₖⱼ, ... FGPRNₖₚ dont les représentations courtes S_FGPRNₖ₁, ... S_FGPRNₖⱼ, ... S_FGPRNₖₚ sont les représentations courtes. Le procédé comprend une étape éventuellement distincte d'identification IDTF, parmi toutes les représentations courtes, des représentations courtes S_FGPRNₖ₁, ... S_FGPRNₖⱼ, ... S_FGPRNₖₚ dont la distance est inférieure (ou égale) audit seuil. Ce seuil peut être nul. Dans cette hypothèse, seules des parts de données confidentielles dont les représentations courtes approximées sont strictement égales à celle qui est recherchée sont transmises. Si le seuil (nécessairement positif ou nul) est strictement supérieur à zéro, alors un ensemble potentiellement plus important de parts de données confidentielles est transmis, ce qui est opportun dans le cas d'une authentification biométrique (car la probabilité que deux captures distinctes d'une même empreinte biométrique soient strictement égales est généralement très faible).

Un procédé selon le deuxième mode de réalisation comprend une obtention GEN_FGPRN, par un circuit électronique d'obtention GEN_FGPRN_C du dispositif d'accès AUTH_STAT, à partir des parts reçues à l'étape précédente FGPRN_{1,k1}, ... FGPRN_{1,kj}, ... FGPRN_{1,kp}, FGPRN_{2,k1}, ... FGPRN_{2,kj}, ... FGPRN_{2,kp}, FGPRN_{N,k1}, ... FGPRN_{N,kj}, ... FGPRN_{N,kp}, des données confidentielles correspondantes FGPRNₖ₁, ... FGPRNₖⱼ, ... FGPRNₖₚ. Il n'est bien entendu pas indispensable de transmettre les N parts pour chaque donnée confidentielle. Selon une mise en œuvre possible, seules t parts sont transmises pour chaque donnée confidentielle. Selon une autre mise en œuvre, le procédé transmet un nombre de parts compris entre t+1 et N.

Le circuit électronique d'obtention GEN_FGPRN est par exemple un circuit électronique dédié tel qu'un FPGA, un ASIC, un PAL (ou tout autre composant électronique configurable), voire un composant électronique complètement sur mesure. Selon une autre mise en œuvre possible, le circuit électronique d'obtention comprend à la fois un processeur et une mémoire associée (par exemple de type RAM, EEPROM, Flash, ROM, mémoire magnétique, mémoire optique, etc.), la mémoire associée stockant un programme apte (lorsqu'il est exécuté par le processeur) à générer les données confidentielles pertinente en fonction des parts reçues (les parts FGPRN_{1,k1}, ... FGPRN_{2,k1}, ... FGPRN_{N,k1} permettant de générer la donnée confidentielle FGPRNₖ₁, et ainsi de suite). Pour ainsi générer (ou reconstituer) une donnée confidentielle x (par exemple FGPRNₖ₁) à partir d'au moins t parts obtenues selon le schéma de Shamir précité, le circuit électronique d'obtention utilise l'interpolation de Lagrange, qui permet de retrouver le polynôme P utilisé pour le partage de x. Le circuit électronique d'obtention retrouve alors x en évaluant P en 0.

Ce deuxième mode de réalisation est avantageux par rapport à l'état de l'art notamment en ce que les opérations nécessaires pour un calcul d'identification conventionnel, bien que théoriquement réalisables en utilisant des techniques de calcul sécurisé multipartite, engendrent un coût en calculs et en bande passante entre les serveurs trop élevé pour être utilisable en pratique (du moins pour les applications courantes). Le deuxième mode de réalisation tient compte simultanément des contraintes de SMC et de la nature des données confidentielles en utilisant des techniques de filtrage lors de l'identification de la (ou des) donnée(s) confidentielle(s).

Les opérations dans le "domaine partagé" sont ainsi réduites pour l'essentiel à un calcul de distance (évitant de communiquer tous les résultats intermédiaires).

Sur la figure 1, le circuit électronique de partage SHR_C' et le circuit électronique d'obtention GEN_FGPRN sont intégrés à un seul et même circuit contenant un processeur (partagé) et une mémoire stockant un programme pour la mise en œuvre des fonctions de partage et un programme pour la mise en œuvre des fonctions d'obtention. Cependant, les deux circuits peuvent également être complètement distincts. Sur cette même figure, le récepteur RCV et l'émetteur XMIT' sont un seul et même circuit (tel que l'électronique d'une carte réseau), mais bien sûr il est possible d'utiliser des circuits distincts.

Selon un troisième mode de réalisation, le calcul distribué D_CALC d'un procédé d'accès sécurisé selon le deuxième mode de réalisation comprend une détermination DET, par un circuit de calcul PROCᵢ de chaque serveur SRVᵢ, de K parts de distances mesurées entre :
la part courte S_FGPRN'_{i,k'}, reçue par ce serveur SRVᵢ, de la donnée confidentielle à laquelle un accès est souhaité, et
K parts courtes S_FGPRN_{i,1}, S_FGPRN_{i,2}, ... S_FGPRN_{i,K} que ce serveur SRVᵢ a préalablement stockées.

N*K parts de distances sont donc ainsi déterminées (K parts de distances par serveur).

Le procédé mesure la distance entre la représentation courte approximée S_FGPRN'_{k'} de la donnée confidentielle à laquelle un accès est souhaité et une représentation courte S_FGPRNⱼ stockée de manière distribuée sur les N serveurs SRV₁, SRVᵢ, SRV_{N} en combinant (par exemple en sommant), parmi lesdites N*K parts de distances, les N parts de distances mesurées respectivement par chaque serveur SRVᵢ entre :
la part courte S_FGPRN_{i,j} de la représentation courte S_FGPRNⱼ stockée sur ce serveur SRVᵢ et
la part courte correspondante S_FGPRN'_{i,k'} de ladite représentation courte approximée reçue par ce serveur SRVᵢ.

Selon un quatrième mode de réalisation, le calcul distribué D_CALC d'un procédé d'accès sécurisé selon le deuxième mode de réalisation comprend une détermination DET, par un circuit de calcul PROCᵢ de chaque serveur SRVᵢ, de K parts de distances mesurées entre :
la part courte S_FGPRN'_{i,k'}, reçue par ce serveur SRVᵢ, de la donnée confidentielle à laquelle un accès est souhaité, et
K parts courtes S_FGPRN_{i,1}, S_FGPRN_{i,2}, ... S_FGPRN_{i,K} que ce serveur SRVᵢ a préalablement stockées.

N*K parts de distances sont donc ainsi déterminées (K distances par serveur).

Le procédé effectue une comparaison sécurisée entre un seuil et la distance mesurée entre la représentation courte approximée S_FGPRN'_{k'} de la donnée confidentielle à laquelle un accès est souhaité et une représentation courte S_FGPRNⱼ stockée de manière distribuée sur les N serveurs SRV₁, SRVᵢ, SRV_{N}. La distance est mesurée en appliquant un protocole sécurisé (par exemple le protocole de Takashi Nishide et Kazuo Ohta) de calcul de distance à N parts de distances, parmi lesdites N*K parts de distances, lesdites N parts de distances étant les distances mesurées respectivement par chaque serveur SRVᵢ entre :
la part courte S_FGPRN_{i,j} de la représentation courte S_FGPRNⱼ stockée sur ce serveur SRVᵢ et
la part courte correspondante S_FGPRN'_{i,k'} de ladite représentation courte approximée reçue par ce serveur SRVᵢ.

Ce quatrième mode de réalisation est avantageux notamment en ce qu'il permet que seules les parts du résultat de la comparaison soient rassemblées. Les serveurs peuvent ainsi apprendre la liste des candidats mais pas les distances.

Selon un cinquième mode de réalisation, les K distances mesurées selon un procédé d'accès sécurisé selon l'un des deuxième au quatrième modes de réalisation sont K distances de Hamming.

Un exemple particulier du cinquième mode de réalisation est détaillé ci-dessous. Le procédé (comprenant l'étape de détermination DET précitée) comprend, pour le calcul d'une distance de Hamming entre une part courte S_FGPRN'_{i,k'} de la représentation courte approximée (S_FGPRN'_{k'}) de la donnée confidentielle à laquelle un accès est souhaité et une part courte S_FGPRN_{i,j} préalablement stockée dans un serveur SRVᵢ, un calcul distribué sécurisé, par des circuits de calcul PROC₁, ... PROCᵢ, ... PROC_{N} des N serveurs SRV₁, ... SRVᵢ, ... SRV_{N}, du produit desdites deux parts courtes S_FGPRN'_{i,k'}, S_FGPRN_{i,j}.

Le procédé comprend un calcul local, par un circuit de calcul PROCᵢ dudit serveur SRVᵢ, du double dudit produit desdites deux parts courtes S_FGPRN'_{i,k'}, S_FGPRN_{i,j}.

Le procédé comprend un calcul local, par un circuit de calcul PROCᵢ dudit serveur SRVᵢ, d'une somme desdites deux parts courtes S_FGPRN'_{i,k'}, S_FGPRN_{i,j}.

Le procédé comprend un calcul local, par un circuit de calcul PROCᵢ dudit serveur SRVᵢ, de la distance de Hamming par soustraction dudit double dudit produit desdites deux parts courtes S_FGPRN'_{i,k'}, S_FGPRN_{i,j} à ladite somme desdites deux parts courtes S_FGPRN'_{i,k'}, S_FGPRN_{i,j}.

Cet exemple particulier du cinquième mode de réalisation s'appuie ainsi sur un procédé de partage tel que :
- A partir d'une part xi d'une donnée confidentielle x et d'une part yi d'une autre donnée confidentielle y, un serveur SRVᵢ peut calculer une part zi de z = x+y, sans interactions ni avec les autres serveurs ni avec le dispositif d'accès AUTH_STAT et sans n'avoir jamais accès ni à x ni à y ;
- A partir d'une part xi de x et d'un entier n, le serveur SRVᵢ peut calculer une part zi de z=n*x (=x+x+...+x n fois), sans interactions ni avec les autres serveurs ni avec le dispositif d'accès AUTH_STAT et sans n'avoir jamais accès à x ;
- A partir d'une part xi de x et d'une part yi de y, le serveur SRVᵢ peut calculer une part zi de z = x*y, en interagissant avec les autres serveurs, sans interactions avec le dispositif d'accès AUTH_STAT et sans connaître ni x ni y.

Les serveurs ne sont pas censés obtenir d'informations sur les données confidentielles qu'ils manipulent, et un procédé selon l'invention ne leur donne accès qu'à des parts de ces données, et à des résultats de calculs résultant de ces parts. Le document R. Cramer, I. Damgard, and J.B. Nielsen. Secure Multiparty Computation and Secret Sharing - An Information Theoretic Approach. Book Draft, 2012, fournit des détails sur le partage de secret, la SMC et des techniques pouvant être employées pour l'addition et la multiplication. Ce type de techniques a été initialement décrit dans Michael Ben-Or, Shafi Goldwasser, Avi Wigderson, "Completeness Theorems for Non-Cryptographic Fault-Tolerant Distributed Computation", STOC 1988:1-10.

Pour calculer une distance de Hamming entre deux éléments, il est usuel de calculer un ou exclusif (XOR) entre les deux éléments. Mais selon une mise en œuvre possible, les éléments dont on souhaite déterminer la distance de Hamming les séparant sont divisés en bits, et chaque bit est représenté par un élément d'un corps (le corps étant de caractéristique supérieure ou égale au nombre de parts N, N étant également le nombre de serveurs SRVᵢ). De plus, la caractéristique doit aussi être plus grande que la distance maximale entre deux représentations courtes. Par exemple, pour une distance de Hamming sur 128 bits, la caractéristique doit supérieure à 128. Par exemple, les éléments sont des représentations courtes approximées de 128 bits, les 128 bits d'une représentation courte approximée étant divisés en 128 bits individuels, chacun représentés par un octet. Une représentation courte approximée est ainsi représentée par un ensemble de 128 octets (chacun identifiant un élément d'un corps).

Il est souvent impossible de calculer un XOR entre deux éléments par la technique conventionnelle (consistant, lorsque deux bits correspondants sont identiques, à définir le bit de sortie à 0, et lorsqu'ils sont différents, à définir le bit de sortie à 1). Dans l'exemple précité, les 128 octets représentent chacun un élément d'un corps dans lequel XOR ne fonctionne pas de cette façon (un XOR conventionnel des octets représentant chaque bit ne donne aucune information pertinente).

Selon une mise en œuvre possible, le procédé met donc en œuvre le XOR par une technique alternative consistant (pour calculer a XOR b, a et b étant deux éléments d'un corps) à effectuer le calcul similaire: a+b-2·a^{∗}b (+ et * désignant respectivement la loi d'addition et la loi de multiplication du corps, et · désignant la loi de multiplication par un scalaire). Si a et b sont égaux (tous deux représentent le bit 0 ou tous deux représentent le bit 1), a+b-2·a^{∗}b est nul, et si a et b représentent deux bits différents (0 et 1 ou 1 et 0), a+b-2-a^{∗}b est égal à 1.

L'addition a+b ne pose pas de difficulté particulière : elle est préservée. Par exemple, si les éléments a et b multipliés sont représentés par des polynômes, leur addition (addition des polynômes) ne change pas le degré du polynôme et ne pose pas de difficulté.

Mais la multiplication a^{∗}b est plus complexe : elle implique pour déterminer chaque produit a^{∗}b, un mécanisme interactif impliquant des serveurs autres que le seul serveur concerné (stockant a et b). Par exemple, si les éléments multipliés sont représentés par des polynômes, leur multiplication est un polynôme de degré pouvant être différent, ce qui pose généralement des difficultés, résolues par le mécanisme interactif.

A titre d'illustration, dans une hypothèse où l'on souhaite travailler sur 128 bits, le procédé peut comprendre les phases suivantes.

Dans une phase initiale dite de partage, le procédé, après avoir codé chaque « bit » i de 1 à 128 (vu comme un 0 ou un 1) d'une représentation courte sur un élément xi (représentant le bit respectif) du corps considéré, partage chaque élément xi en N parts xi₁,...,xi_{N} réparties entre les N différents serveurs.

Dans une phase de calcul de distance visant à déterminer la distance de Hamming entre x (représenté par ses parts xi) et y (représenté par ses parts yi), pour chaque coordonnée i de 1 à 128, le serveur j calcule une part zij de zi = (xi + yi - 2 xi yi) en utilisant par exemple l'une des techniques précitées (les sommes sont calculées localement par le serveur j et les multiplications utilisent des interactions avec tous les autres serveurs). Puis le procédé calcule une part de la somme des zi, pour i de 1 à 128. Cela donne une part de la distance de Hamming (qui est la somme des XOR bit à bit). La distance de Hamming entre x et y est obtenue en calculant la somme des distances de Hamming entre xi et yi pour tout i de 1 à 128.

Selon un sixième mode de réalisation, les données confidentielles d'un procédé d'accès sécurisé selon l'un des deuxième au cinquième modes de réalisation sont des données biométriques.

Selon une mise en œuvre possible, la donnée biométrique dont la représentation courte approximée S_FGPRN'ₖ est extraite est une empreinte biométrique candidate que le procédé vise à authentifier. Le procédé comprend alors (après régénération des données biométriques pertinentes par le circuit électronique d'obtention GEN_FGPRN) une comparaison de l'empreinte biométrique candidate à chacune des empreintes de l'ensemble des empreintes biométriques générées à partir des parts reçues. Si l'une d'elles est la bonne, l'utilisateur est authentifié, dans le cas contraire (si aucune des empreintes biométriques ne correspond), il ne l'est pas.

Selon un autre mode de réalisation, les données confidentielles d'un procédé d'accès sécurisé selon l'un des deuxième au cinquième modes de réalisation sont un document (texte, photographie, etc.). Selon une mise en œuvre possible de ce mode de réalisation, le procédé affiche (ou permet d'afficher) l'ensemble des documents générés à partir des parts. L'utilisateur peut alors sélectionner celui ou ceux qu'il recherchait.

Selon un septième mode de réalisation, un dispositif d'enregistrement ENR_STAT pour stockage distribué sécurisé, sur N serveurs SRV₁, ... SRVᵢ, ... SRV_{N}, de données confidentielles, comprend un circuit électronique d'obtention BIO_SENSOR d'une donnée confidentielle FGPRNₖ.

Le dispositif d'enregistrement ENR_STAT comprend un circuit électronique d'extraction EXTR_C d'une représentation courte approximée S_FGPRNₖ de la donnée confidentielle FGPRNₖ à partir de ladite donnée confidentielle FGPRNₖ.

Le dispositif d'enregistrement ENR_STAT comprend un circuit électronique de partage SHR_C de la donnée confidentielle FGPRNₖ en N parts FGPRN_{1,k}, FGPRN_{2,k}, ... FGPRN_{i,k}, ... FGPRN_{N,k} avec un seuil t tel qu'au moins t parts soient nécessaires pour reconstituer la donnée confidentielle FGPRNₖ, et de la représentation courte approximée S_FGPRNₖ en N parts courtes S_FGPRN_{1,k}, S_FGPRN_{2,k}, ... S_FGPRN_{i,k}, ... S_FGPRN_{N,k} avec un seuil t tel qu'au moins t parts courtes soient nécessaires pour reconstituer la représentation courte approximée S_FGPRNₖ.

Le dispositif d'enregistrement ENR_STAT comprend un émetteur XMIT agencé pour transmettre chacune FGPRN_{i,k} de ces N parts FGPRN_{1,k}, FGPRN_{2,k}, ... FGPRN_{i,k}, ... FGPRN_{N,k} et chacune S_FGPRNₖ de ces N parts courtes S_FGPRN_{1,k}, S_FGPRN_{2,k}, ... S_FGPRN_{i,k}, ... S_FGPRN_{N,k} à un serveur respectif SRVᵢ parmi les N serveurs SRV₁, ... SRVᵢ, ... SRV_{N}, afin de les y stocker.

Les détails de mise en œuvre du procédé selon le premier mode de réalisation se transposent au dispositif selon le septième mode de réalisation et réciproquement.

Selon un huitième mode de réalisation, un système d'accès sécurisé, par un dispositif d'accès AUTH_STAT, à des données confidentielles stockées de manière distribuée et sécurisée sur N serveurs SRV₁, ... SRVᵢ, ... SRV_{N}, comprend le dispositif d'accès AUTH_STAT et les N serveurs SRV₁, ... SRVᵢ, ... SRV_{N}.

Le dispositif d'accès AUTH_STAT comprend un circuit électronique de partage SHR_C' d'une représentation courte approximée S_FGPRN'_{k'} d'une donnée confidentielle à laquelle un accès est souhaité en N parts courtes S_FGPRN'_{1,k'}, S_FGPRN'_{2,k'}, ... S_FGPRN'_{i,k'}, ... S_FGPRN'_{N,k'}, avec un seuil t tel qu'au moins t parts courtes soient nécessaires pour reconstituer la représentation courte approximée S_FGPRN'ₖ.

Le dispositif d'accès AUTH_STAT comprend un émetteur XMIT' agencé pour transmettre chacune S_FGPRN'_{i,k'} de ces N parts courtes S_FGPRN'_{i,k'}, S_FGPRN'_{2,k'}, ... S_FGPRN'_{i,k'}, ... S_FGPRN'_{N,k'} à un serveur respectif SRVᵢ parmi les N serveurs SRV₁, ... SRVᵢ, ... SRV_{N}.

Selon une mise en œuvre possible, chaque serveur SRVᵢ comprend un circuit de calcul PROCᵢ agencé pour déterminer, de façon au moins partiellement locale à chaque serveur SRVᵢ, K parts de distances mesurées entre la part courte S_FGPRN'_{i,k'} reçue et K parts courtes S_FGPRN_{i,1}, S_FGPRN_{i,2}, ... S_FGPRN_{i,K} que ledit serveur SRVᵢ a préalablement stockées.

Les N serveurs SRV₁, ... SRVᵢ, ... SRV_{N} comprennent des circuits de calcul PROC₁, ... PROCᵢ, ... PROC_{N} agencés pour mettre en œuvre un calcul distribué des parts de distances entre la représentation courte approximée S_FGPRN'_{k'} et chacune des K représentations courtes approximées S_FGPRN₁, S_FGPRN₂, ... S_FGPRN_{K} stockées de façon distribuée sur les N serveurs SRV₁, ... SRVᵢ, ... SRV_{N} (par exemple sur la base de N*K distances mesurées par un circuit de calcul PROCᵢ).

Chaque serveur SRVᵢ comprend un émetteur XMITᵢ agencé pour transmettre, à un récepteur RCV du dispositif d'accès AUTH_STAT, des parts FGPRN_{i,k1}, ... FGPRN_{i,kj}, ... FGPRN_{i,kp} correspondant aux représentations courtes S_FGPRNₖ₁, ... S_FGPRNₖⱼ, ... S_FGPRNₖₚ dont la distance avec la représentation courte approximée S_FGPRN'_{k'} est inférieure à un seuil déterminé.

Le dispositif d'accès AUTH_STAT comprend un circuit électronique d'obtention GEN_FGPRN agencé pour obtenir, à partir des parts reçues FGPRN_{1,k1}, ... FGPRN_{1,kj}, ... FGPRN_{1,kp}, FGPRN_{2,k1}, ... FGPRN_{2,kj}, ... FGPRN_{2,kp}, FGPRN_{N,k1}, ... FGPRN_{N,kj}, ... FGPRN_{N,kp}, des données confidentielles correspondantes FGPRNₖ₁, ... FGPRNₖⱼ, ... FGPRNₖₚ.

Les détails de mise en œuvre du procédé selon le deuxième mode de réalisation se transposent au dispositif selon le huitième mode de réalisation et réciproquement.

Selon un neuvième mode de réalisation, les K distances mesurées par un système d'accès sécurisé selon le sixième mode de réalisation sont K distances de Hamming.

Selon une mise en œuvre possible, le système comprend les éléments suivants pour le calcul d'une distance de Hamming entre la part courte S_FGPRN'_{i,k'} et une part courte S_FGPRN_{i,j} préalablement stockée dans un serveur SRVᵢ.

Des circuits de calcul PROC₁, ... PROCᵢ, ... PROC_{N} des N serveurs SRV₁, ... SRVᵢ, ... SRV_{N} sont agencés pour effectuer un calcul distribué sécurisé du produit desdites deux parts courtes S_FGPRN'_{i,k'}, S_FGPRN_{i,j}.

Un circuit de calcul PROCᵢ dudit serveur SRVᵢ est agencé pour effectuer un calcul local du double dudit produit desdites deux parts courtes S_FGPRN'_{i,k'}, S_FGPRN_{i,j}.

Un circuit de calcul PROCᵢ dudit serveur SRVᵢ est agencé pour effectuer un calcul local d'une somme desdites deux parts courtes S_FGPRN'_{i,k'}, S_FGPRN_{i,j}.

Un circuit de calcul PROCᵢ dudit serveur SRVᵢ est agencé pour effectuer un calcul local de la distance de Hamming par soustraction dudit double dudit produit desdites deux parts courtes S_FGPRN'_{i,k'}, S_FGPRN_{i,j} à ladite somme desdites deux parts courtes S_FGPRN'_{i,k'}, S_FGPRN_{i,j}.

Les détails de mise en œuvre du procédé selon le cinquième mode de réalisation se transposent au dispositif selon le neuvième mode de réalisation et réciproquement.

Selon un dixième mode de réalisation, les données confidentielles d'un système d'accès sécurisé selon l'un des huitième ou neuvième modes de réalisation sont des données biométriques.

Les détails de mise en œuvre du procédé selon le sixième mode de réalisation se transposent au dispositif selon le dixième mode de réalisation et réciproquement.

Selon un onzième mode de réalisation, un programme d'ordinateur comprend une suite d'instructions qui, lorsqu'elles sont exécutées par un processeur, conduisent le processeur à mettre en œuvre un procédé selon l'un des premier au sixième modes de réalisation.

Ce programme d'ordinateur peut être écrit dans tout langage de programmation approprié, tel que l'assembleur, le langage C, le langage Java, etc.

Ce onzième mode de réalisation comprend essentiellement deux types de programmes d'ordinateurs.

Il comprend d'une part des programmes d'ordinateurs ayant vocation à mettre en œuvre un procédé de stockage distribué sécurisé selon le premier mode de réalisation. Selon une mise en œuvre possible, ces programmes sont stockés dans un dispositif d'enregistrement ENR_STAT et sont exécutés par un processeur de ce dispositif d'enregistrement ENR_STAT.

Il comprend d'autre part des programmes d'ordinateurs ayant vocation à mettre en œuvre un procédé d'accès sécurisé selon l'un des deuxième au sixième modes de réalisation. Selon une mise en œuvre possible, ces programmes sont séparés en une partie stockée dans un dispositif d'accès AUTH_STAT (et ayant vocation à être exécutée par un processeur de ce dispositif d'accès AUTH_STAT) et un ensemble de parties (pouvant être identiques) stockées chacune dans un serveur SRVᵢ respectif (et ayant vocation à être exécutée par un processeur de ce serveur SRVᵢ).

Selon un douzième mode de réalisation, un support de stockage non transitoire lisible par ordinateur stocke un programme d'ordinateur selon le onzième mode de réalisation. Ce support de stockage est par exemple une mémoire de type RAM sauvegardée par batterie, ou EEPROM, ou ROM, ou Flash, ou encore une mémoire magnétique ou une mémoire optique.

L'invention ne se limite pas aux formes de réalisation décrites ci-avant à titre d'exemples non limitatifs. Par exemple, les troisième et quatrième modes de réalisation sont évidemment transposables à un système d'accès sécurisé selon le huitième mode de réalisation.

## Revendications

1. Procédé de stockage distribué sécurisé, sur N serveurs (SRV₁, ... SRVᵢ, ... SRV_{N}), de données confidentielles, le procédé comprenant :
/a/ une obtention (SENSE), par un circuit électronique d'obtention (BIO_SENSOR) d'un dispositif d'enregistrement (ENR_STAT), d'une donnée confidentielle (FGPRNₖ),
/b/ une obtention (EXTR), par un circuit électronique d'extraction (EXTR_C) du dispositif d'enregistrement (ENR_STAT), d'une représentation courte approximée (S_FGPRNₖ) de la donnée confidentielle (FGPRNₖ) à partir de ladite donnée confidentielle (FGPRNₖ),
/c/ une obtention (SHR), par un circuit électronique de partage de secret (SHR_C) du dispositif d'enregistrement (ENR_STAT), de N parts (FGPRN_{1,k}, FGPRN_{2,k}, ... FGPRN_{i,k}, ... FGPRN_{N,k}) de la donnée confidentielle (FGPRNₖ) avec un seuil t tel qu'au moins t parts soient nécessaires pour reconstituer la donnée confidentielle (FGPRNₖ), et de N parts courtes (S_FGPRN_{1,k}, S_FGPRN_{2,k}, ... S_FGPRN_{i,k}, ... S_FGPRN_{N,k}) de la représentation courte approximée (S_FGPRNₖ) avec un seuil t tel qu'au moins t parts courtes soient nécessaires pour reconstituer la représentation courte approximée (S_FGPRNₖ),
/d/ une transmission (TRN), par un émetteur (XMIT) du dispositif d'enregistrement (ENR_STAT), de chacune (FGPRN_{i,k}) de ces N parts (FGPRN_{1,k}, FGPRN_{2,k}, ... FGPRN_{i,k}, ... FGPRN_{N,k}) et de chacune (S_FGPRN_{i,k}) de ces N parts courtes (S_FGPRN_{1,k}, S_FGPRN_{2,k}, ... S_FGPRN_{i,k}, ... S_FGPRN_{N,k}) à un serveur respectif (SRVᵢ) parmi les N serveurs (SRV₁, ... SRVᵢ, ... SRV_{N}), afin de les y stocker.

2. Procédé d'accès sécurisé, par un dispositif d'accès (AUTH_STAT), à des données confidentielles stockées de manière distribuée et sécurisée sur N serveurs (SRV₁, ... SRVᵢ, ... SRV_{N}), le procédé comprenant :
/e/ une obtention (SHR'), par un circuit électronique de partage de secret (SHR_C') du dispositif d'accès (AUTH_STAT), de N parts courtes (S_FGPRN'_{1,k'}, S_FGPRN'_{2,k'}, ... S_FGPRN'_{i,k'}, ... S_FGPRN'_{N,k'}) d'une représentation courte approximée (S_FGPRN'ₖ) d'une donnée confidentielle à laquelle un accès est souhaité, avec un seuil t tel qu'au moins t parts courtes soient nécessaires pour reconstituer la représentation courte approximée (S_FGPRN'ₖ),
/f/ une transmission (TRN'), par un émetteur (XMIT') du dispositif d'accès (AUTH_STAT), de chacune (S_FGPRN'_{i,k}) de ces N parts courtes (S_FGPRN'_{1,k'}, S_FGPRN'_{2,k'}, ... S_FGPRN'_{i,k'}, ... S_FGPRN'_{N,k'}) à un serveur respectif (SRVᵢ) parmi les N serveurs (SRV₁, ... SRVᵢ, ... SRV_{N}),
/g/ un calcul distribué (D_CALC), par des circuits de calcul (PROC₁, ... PROCᵢ, ... PROC_{N}) des N serveurs (SRV₁, ... SRVᵢ, ... SRV_{N}), des parts des distances entre la représentation courte approximée (S_FGPRN'_{k'}) et chacune de K représentations courtes approximées (S_FGPRN₁, S_FGPRN₂, ... S_FGPRN_{K}) stockées de façon distribuée sur les N serveurs (SRV₁, ... SRVᵢ, ... SRV_{N}), les K représentations courtes approximées correspondant à K données confidentielles différentes stockées de façon distribuée sur les N serveurs,
/h/ une transmission, par un émetteur (XMITᵢ) de chaque serveur (SRVᵢ) utilisé, à un récepteur (RCV) du dispositif d'accès (AUTH_STAT), des parts des données confidentielles (FGPRN_{i,k1}, ... FGPRN_{i,kj}, ... FGPRN_{i,kp}) correspondant aux représentations courtes (S_FGPRNₖ₁, ... S_FGPRNₖⱼ, ... S_FGPRNₖₚ) dont la distance à la représentation courte approximée (S_FGPRN'ₖ) est inférieure à un seuil déterminé,
/ij/ une obtention (GEN_FGPRN), par un circuit électronique d'obtention (GEN_FGPRN_C) du dispositif d'accès (AUTH_STAT), à partir des parts reçues à l'étape précédente (FGPRN_{1,k1}, ... FGPRN_{1,kj}, ... FGPRN_{1,kp}, FGPRN_{2,k1}, ... FGPRN_{2,kj}, ... FGPRN_{2,kp}, FGPRN_{N,k1}, ... FGPRN_{N,kj}, ... FGPRN_{N,kp}), des données confidentielles correspondantes (FGPRNₖ₁, ... FGPRNₖⱼ, ... FGPRNₖₚ).

3. Procédé d'accès sécurisé selon la revendication 2, dans lequel le calcul distribué (D_CALC) comprend une détermination (DET), par un circuit de calcul (PROCᵢ) de chaque serveur (SRVᵢ), de K parts de distances mesurées entre :
la part courte (S_FGPRN'_{i,k}), reçue par ce serveur (SRVᵢ), de la donnée confidentielle à laquelle un accès est souhaité, et
K parts courtes (S_FGPRN_{i,1}, S_FGPRN_{i,2}, ... S_FGPRN_{i,K}) que ce serveur (SRVᵢ) a préalablement stockées,
soit une détermination de N*K parts de distances,
et dans lequel le procédé mesure la distance entre la représentation courte approximée (S_FGPRN'_{k'}) de la donnée confidentielle à laquelle un accès est souhaité et une représentation courte (S_FGPRNⱼ) stockée de manière distribuée sur les N serveurs (SRV₁, SRVᵢ, SRV_{N}) en combinant, parmi lesdites N*K parts de distances, les N parts de distances mesurées respectivement par chaque serveur (SRVᵢ) entre :
la part courte (S_FGPRN_{i,j}) de la représentation courte (S_FGPRNⱼ) stockée sur ce serveur (SRVᵢ) et
la part courte correspondante (S_FGPRN'_{i,k'}) de ladite représentation courte approximée reçue par ce serveur (SRVᵢ).

4. Procédé d'accès sécurisé selon la revendication 2, dans lequel le calcul distribué (D_CALC) comprend une détermination (DET), par un circuit de calcul (PROCᵢ) de chaque serveur (SRVᵢ), de K parts de distances mesurées entre :
la part courte (S_FGPRN'_{i,k'}), reçue par ce serveur (SRVᵢ), de la donnée confidentielle à laquelle un accès est souhaité, et
K parts courtes (S_FGPRN_{i,1}, S_FGPRN_{i,2}, ... S_FGPRN_{i,K}) que ce serveur (SRVᵢ) a préalablement stockées,
soit une détermination de N*K parts de distances,
et dans lequel le procédé effectue une comparaison sécurisée entre un seuil et la distance mesurée entre la représentation courte approximée (S_FGPRN'_{k'}) de la donnée confidentielle à laquelle un accès est souhaité et une représentation courte (S_FGPRNⱼ) stockée de manière distribuée sur les N serveurs (SRV₁, SRVᵢ, SRV_{N}) en appliquant un protocole sécurisé de calcul de distance à N parts de distances, parmi lesdites N*K parts de distances, lesdites N parts de distances étant les parts de distances mesurées respectivement par chaque serveur (SRVᵢ) entre :
la part courte (S_FGPRN_{i,j}) de la représentation courte (S_FGPRNⱼ) stockée sur ce serveur (SRVᵢ) et
la part courte correspondante (S_FGPRN'_{i,k'}) de ladite représentation courte approximée reçue par ce serveur (SRVᵢ).

5. Procédé d'accès sécurisé selon l'une des revendications 2 à 4, dans lequel les K distances mesurées sont K distances de Hamming.

6. Procédé d'accès sécurisé selon l'une des revendications 2 à 5, dans lequel les données confidentielles sont des données biométriques.

7. Dispositif d'enregistrement (ENR_STAT) pour stockage distribué sécurisé, sur N serveurs (SRVᵢ, ... SRVᵢ, ... SRV_{N}), de données confidentielles, le dispositif d'enregistrement (ENR_STAT) comprenant :
un circuit électronique d'obtention (BIO_SENSOR) d'une donnée confidentielle (FGPRNₖ),
un circuit électronique d'extraction (EXTR_C) d'une représentation courte approximée (S_FGPRNₖ) de la donnée confidentielle (FGPRNₖ) à partir de ladite donnée confidentielle (FGPRNₖ),
un circuit électronique de partage de secret (SHR_C) de la donnée confidentielle (FGPRNₖ) en N parts (FGPRN_{1,k}, FGPRN_{2,k}, ... FGPRN_{i,k}, ... FGPRN_{N,k}) avec un seuil t tel qu'au moins t parts soient nécessaires pour reconstituer la donnée confidentielle (FGPRNₖ), et de la représentation courte approximée (S_FGPRNₖ) en N parts courtes (S_FGPRN_{1,k}, S_FGPRN_{2,k}, ... S_FGPRN_{i,k}, ... S_FGPRN_{N,k}) avec un seuil t tel qu'au moins t parts courtes soient nécessaires pour reconstituer la représentation courte approximée (S_FGPRNₖ),
un émetteur (XMIT) agencé pour transmettre chacune (FGPRN_{i,k}) de ces N parts (FGPRN_{1,k}, FGPRN_{2,k}, ... FGPRN_{i,k}, ... FGPRN_{N,k}) et chacune (S_FGPRN_{i,k}) de ces N parts courtes (S_FGPRN_{1,k}, S_FGPRN_{2,k}, ... S_FGPRN_{i,k}, ... S_FGPRN_{N,k}) à un serveur respectif (SRVᵢ) parmi les N serveurs (SRV₁, ... SRVᵢ, ... SRV_{N}), afin de les y stocker.

8. Système d'accès sécurisé, par un dispositif d'accès (AUTH_STAT), à des données confidentielles stockées de manière distribuée et sécurisée sur N serveurs (SRV₁, ... SRVᵢ, ... SRV_{N}), le système d'accès sécurisé comprenant le dispositif d'accès (AUTH_STAT) et les N serveurs (SRV₁, ... SRVᵢ, ... SRV_{N}),
le dispositif d'accès (AUTH_STAT) comprenant :
un circuit électronique de partage de secret (SHR_C') d'une représentation courte approximée (S_FGPRN'_{k'}) d'une donnée confidentielle à laquelle un accès est souhaité en N parts courtes (S_FGPRN'_{1,k'}, S_FGPRN'_{2,k'}, ... S_FGPRN'_{i,k'}, ... S_FGPRN'_{N,k'}), avec un seuil t tel qu'au moins t parts courtes soient nécessaires pour reconstituer la représentation courte approximée (S_FGPRN'ₖ),
un émetteur (XMIT') agencé pour transmettre chacune (S_FGPRN'_{i,k'}) de ces N parts courtes (S_FGPRN'_{1,k'}, S_FGPRN'_{2,k'}, ... S_FGPRN'_{i,k'}, ... S_FGPRN'_{N,k'}) à un serveur respectif (SRVᵢ) parmi les N serveurs (SRV₁, ... SRVᵢ, ... SRV_{N}),
les N serveurs (SRV₁, ... SRVᵢ, ... SRV_{N}) comprenant des circuits de calcul (PROC₁, ... PROCᵢ, ... PROC_{N}) agencés pour mettre en œuvre un calcul distribué des parts des distances entre la représentation courte approximée (S_FGPRN'_{k'}) et chacune de K représentations courtes approximées (S_FGPRN₁, S_FGPRN₂, ... S_FGPRN_{K}) stockées de façon distribuée sur les N serveurs (SRV₁, ... SRVᵢ, ... SRV_{N}), les K représentations courtes approximées correspondant à K données confidentielles différentes stockées de façon distribuée sur les N serveurs,
chaque serveur (SRVᵢ) comprenant un émetteur (XMITᵢ) agencé pour transmettre, à un récepteur (RCV) du dispositif d'accès (AUTH_STAT), des parts des données confientielles (FGPRN_{i,k1}, ... FGPRN_{i,kj}, ... FGPRN_{i,kp}) correspondant aux représentations courtes (S_FGPRNₖ₁, ... S_FGPRNₖⱼ, ... S_FGPRNₖₚ) dont la distance avec la représentation courte approximée (S_FGPRN'_{k'}) est inférieure à un seuil déterminé,
le dispositif d'accès (AUTH_STAT) comprenant un circuit électronique d'obtention (GEN_FGPRN) agencé pour obtenir, à partir des parts reçues (FGPRN_{1,k1}, ... FGPRN_{1,kj}, ... FGPRN_{1,kp}, FGPRN_{2,k1}, ... FGPRN_{2,kj}, ... FGPRN_{2,kp}, FGPRN_{N,k1}, ... FGPRN_{N,kj}, ... FGPRN_{N,kp}), des données confidentielles correspondantes (FGPRNₖ₁, ... FGPRNₖⱼ, ... FGPRNₖₚ).

9. Système d'accès sécurisé selon la revendication 8, dans lequel les K distances mesurées sont K distances de Hamming.

10. Système d'accès sécurisé selon l'une des revendications 8 ou 9, dans lequel les données confidentielles sont des données biométriques.

11. Programme d'ordinateur comprenant une suite d'instructions qui, lorsqu'elles sont exécutées par un processeur, conduisent le processeur à mettre en œuvre un procédé selon l'une des revendications 1 à 6.

12. Support de stockage non transitoire lisible par ordinateur, ledit support stockant un programme d'ordinateur selon la revendication 11.

## Patentansprüche

1. Verfahren zum sicheren verteilten Speichern von vertraulichen Daten auf N Servern (SRV₁, ... SRVᵢ, ... SRV_{N}), wobei das Verfahren Folgendes aufweist:
/a/ Erhalten (SENSE) eines vertraulichen Datenelements (FGPRNₖ) durch eine elektronische Schaltung zum Erhalten (BIO-SENSOR) einer Aufzeichnungsvorrichtung (ENR_STAT),
/b/ Erhalten (EXTR) einer angenäherten Kurzdarstellung (S_FGPRNₖ) des vertraulichen Datenelements (FGPRNₖ) ausgehend von dem vertraulichen Datenelement (FGPRNₖ) durch eine elektronische Schaltung zum Extrahieren (EXTR_C) der Aufzeichnungsvorrichtung (ENR_STAT),
/c/ Erhalten (SHR) von N Teilen (FGPRN_{1,k}, FGPRN_{2,k}, ... FGPRN_{i,k}, ... FGPRN_{N,k}) des vertraulichen Datenelements (FGPRNₖ) durch eine elektronische Schaltung zum Geheimnisteilen (SHR_C) der Aufzeichnungsvorrichtung (ENR_STAT) mit einer Schwelle t, wobei mindestens t Teile erforderlich sind, um das vertrauliche Datenelement (FGPRNₖ) wiederherzustellen, und N kurze Teile (S_FGPRN_{1,k}, S_FGPRN_{2,k}, ... S_FGPRN_{1,k}, ... S_FGPRN_{N,k}) der angenäherten Kurzdarstellung (S_FGPRNₖ) mit einer Schwelle t, wobei mindestens t Teile erforderlich sind, um die angenäherte Kurzdarstellung (S_FGPRNₖ) wiederherzustellen,
/d/ Übertragen (TRN) von jedem (FGPRN_{i,k}) dieser N Teile (FGPRN_{1,k}, FGPRN_{2,k}, ... FGPRN_{i,k}, ... FGPRN_{N,k}) und jedem (S_FGPRN_{i,k}) dieser N kurzen Teile (S_FGPRN_{i,k}, S_FGPRN_{2,k}, ... S_FGPRN_{i,k}, ... S_FGPR_{N,k}) durch einen Sender (XMIT) der Aufzeichnungsvorrichtung (ENR_STAT) an einen entsprechenden Server (SRVᵢ) unter den N Servern (SRV₁, ... SRVᵢ, ... SRV_{N}), um sie dort zu speichern.

2. Verfahren zum gesicherten Zugreifen auf vertrauliche Daten, die verteilt und gesichert auf N Servern (SRV₁, ... SRVᵢ, ... SRV_{N}) gespeichert sind, durch eine Zugriffsvorrichtung (AUTH_STAT), wobei das Verfahren Folgendes aufweist:
/e/ Erhalten (SHR') von N kurzen Teilen (S_FGPRN'_{1,k'}, S_FGPRN' _{2,k'}, ... S_FGPRN'_{i,k'}, ... S_FGPRN'_{N,k'}) einer angenäherten Kurzdarstellung (S_FGPRN'_{k'}) eines vertraulichen Datenelements, auf das ein Zugriff gewünscht wird, durch eine elektronische Schaltung zum Geheimnisteilen (SHR_C') der Zugriffsvorrichtung (AUTH_STAT) mit einer Schwelle t, wobei mindestens t Teile erforderlich sind, um die angenäherte Kurzdarstellung (S_FGPRN'ₖ) wiederherzustellen,
/f/ Übertragen (TRN') von jedem (S_FGPRN'_{i,k'}) dieser N kurzen Teile (S_FGPRN'_{1,k'}, S_FGPRN'_{2,k'}, ... S_FGPRN'_{i,k'}, ... S_FGPRN'_{N,k'}) durch einen Sender (XMIT') der Zugriffsvorrichtung (AUTH_STAT) an einen entsprechenden Server (SRVᵢ) unter den N Servern (SRV₁, ... SRVᵢ, ... SRV_{N}),
/g/ verteiltes Berechnen (D_CALC) der Teile der Abstände zwischen der angenäherten Kurzdarstellung (S_FGPRN'_{k'}) und jeder der K angenäherten Kurzdarstellungen (S_FGPRN₁, S_FGPRN₂, ... S_FGPRN_{K}), die verteilt auf den N Servern (SRV₁, ... SRVᵢ, ... SRV_{N}) gespeichert sind, durch Schaltungen zum Berechnen (PROC₁, ... PROCᵢ, ... PROC_{N}) der N Server (SRV₁, ... SRVᵢ, ... SRV_{N}), wobei die K angenäherten Kurzdarstellungen K unterschiedlichen vertraulichen Daten entsprechen, die verteilt auf den N Servern gespeichert sind,
/h/ Übertragen der Teile der vertraulichen Daten (FGPRN_{i,k1}, ... FGPRN_{i,kj}, ... FGPRN_{i,kp}), die den Kurzdarstellungen (S_FGPRNₖ₁, ... S_FGPRNₖⱼ, ... S_FGPRNₖₚ) entsprechen, bei denen der Abstand zur angenäherten Kurzdarstellung (S_FGPRN'_{k'}) kleiner als eine festgelegte Schwelle ist, durch einen Sender (XMITᵢ) jedes verwendeten Servers (SRVᵢ) an einen Empfänger (RCV) der Zugriffsvorrichtung (AUTH_STAT),
/ij/ Erhalten (GEN_FGPRN) der entsprechenden vertraulichen Daten (FGPRNₖ₁, ... FGPRNₖⱼ, ... FGPRNₖₚ) durch eine elektronische Schaltung zum Erhalten (GEN_FGPRN_C) der Zugriffsvorrichtung (AUTH_STAT) ausgehend von den im vorausgehenden Schritt empfangenen Teilen (FGPRN_{1,k1}, ... FGPRN_{1,kj}, ... FGPRN_{1,kp}, ... FGPRN_{2,k1}, ... FGPRN_{2,kj}, ... FGPRN_{2,kp}, ... FGPRN_{N,k1}, ... FGPRN_{N,kj}, ... FGPRN_{N,kp}).

3. Verfahren zum gesicherten Zugreifen nach Anspruch 2, bei dem das verteilte Berechnen (D_CALC) ein Bestimmen (DET) von K Abstandsteilen durch eine Schaltung zum Berechnen (PROCᵢ) jedes Servers (SRVᵢ) aufweist, die gemessen werden zwischen:
dem kurzen Teil (S_FGPRN'_{i,k'}) des vertraulichen Datenelements, auf das ein Zugriff gewünscht wird, der von diesem Server (SRVᵢ) empfangen wurde, und K kurzen Teilen (S_FGPRN_{i,1}, S_FGPRN_{i,2}, ... S_FGPRN_{i,K}), die dieser Server (SRVᵢ) vorher gespeichert hat, also ein Bestimmen von N*K Abstandsteilen,
und in dem das Verfahren den Abstand zwischen der angenäherten Kurzdarstellung (S_FGPRN'_{k'}) des vertraulichen Datenelements, auf das ein Zugriff gewünscht wird, und einer Kurzdarstellung (S_FGPRNⱼ) misst, die verteilt auf den N Servern (SRV₁, SRVᵢ, SRV_{N}) gespeichert ist, durch Kombinieren der N Abstandsteile unter den N*K Abstandsteilen, die entsprechend von jedem Server (SRVᵢ) gemessen werden zwischen:
dem kurzen Teil (S_FGPRN_{i,j}) der Kurzdarstellung (S_FGPRNⱼ), die auf diesem Server (SRVᵢ) gespeichert ist, und
dem entsprechenden kurzen Teil (S_FGPRN'_{i,k'}) der angenäherten Kurzdarstellung, die von diesem Server empfangen wurde (SRVᵢ) .

4. Verfahren zum gesicherten Zugreifen nach Anspruch 2, bei dem das verteilte Berechnen (D_CALC) ein Bestimmen (DET) von K Abstandsteilen durch eine Schaltung zum Berechnen (PROCᵢ) jedes Servers (SRVᵢ) aufweist, die gemessen werden zwischen:
dem kurzen Teil (S_FGPRN'_{i,k'}) des vertraulichen Datenelements, auf das ein Zugriff gewünscht wird, der von diesem Server (SRVᵢ) empfangen wurde, und K kurzen Teilen (S_FGPRN_{i,1}, S_FGPRN_{i,2}, ... S_FGPRN_{1,K}), die dieser Server (SRVᵢ) vorher gespeichert hat, also ein Bestimmen von N*K Abstandsteilen,
und in dem das Verfahren einen gesicherten Vergleich zwischen einer Schwelle und dem Abstand durchführt der zwischen der angenäherten Kurzdarstellung (S_FGPRN'_{k'}) des vertraulichen Datenelements, auf das ein Zugriff gewünscht wird, und einer Kurzdarstellung (S_FGPRNⱼ) gemessen wird, die verteilt auf den N Servern (SRV₁, SRVᵢ, SRV_{N}) unter Anwenden eines gesicherten Protokolls zum Berechnen des Abstands zu N Abstandsteilen unter den N*K Abstandsteilen gespeichert ist, wobei die N Abstandsteile die Abstandsteile sind, die entsprechenden von jedem Server (SRVᵢ) gemessen werden zwischen:
dem kurzen Teil (S_FGPRN_{i,j}) der Kurzdarstellung (S_FGPRNⱼ), die auf diesem Server (SRVᵢ) gespeichert ist, und dem entsprechenden kurzen Teil (S_FGPRN_{i,k'}) der angenäherten Kurzdarstellung, die von diesem Server (SRVᵢ) empfangen wurde.

5. Verfahren zum gesicherten Zugreifen nach einem der Ansprüche 2 bis 4, bei dem die K gemessenen Abstände K Hammingabstände sind.

6. Verfahren zum gesicherten Zugreifen nach einem der Ansprüche 2 bis 5, bei dem die vertraulichen Daten biometrische Daten sind.

7. Aufzeichnungsvorrichtung (ENR_STAT) zum sicheren verteilten Speichern von vertraulichen Daten auf N Servern (SRV₁, ... SRVᵢ, ... SRV_{N}), wobei die Aufzeichnungsvorrichtung (ENR_STAT) Folgendes aufweist:
eine elektronische Schaltung zum Erhalten (BIO_SENSOR) eines vertraulichen Datenelements (FGPRNₖ),
eine elektronische Schaltung zum Extrahieren (EXTR_C) einer angenäherten Kurzdarstellung (S_FGPRNₖ) des vertraulichen Datenelements (FGPRNₖ) ausgehend von dem vertraulichen Datenelement (FGPRNₖ),
eine elektronischen Schaltung zum Geheimnisteilen (SHR_C) des vertraulichen Datenelements (FGPRNₖ) in N Teilen (FGPRN_{1,k}, FGPRN_{2,k}, ... FGPRN_{i,k},... FGPRN_{N,k}) mit einer Schwelle t, wobei mindestens t Teile erforderlich sind, um das vertrauliche Datenelement (FGPRNₖ) wiederherzustellen, und der angenäherten Kurzdarstellung (S_FGPRNₖ) in N kurzen Teilen (S_FGPRN_{1,k}, S_FGPRN_{2,k}, ... S_FGPRN_{i,k}, ... S_FGPRN_{N,k}) mit einer Schwelle t, wobei mindestens t Teile erforderlich sind, um die angenäherte Kurzdarstellung (S_FGPRNₖ) wiederherzustellen,
einen Sender (XMIT), ausgebildet zum Übertragen von jedem (FGPRN_{i,k}) dieser N Teile (FGPRN_{1,k}, FGPRN_{2,k}, ... FGPRN_{i,k}, ... FGPRN_{N,k}) und jedem (S_FGPRN_{i,k}) dieser N kurzen Teile (S_FGPRN_{1,k}, S_FGPRN_{2,k}, ... S_FGPRN_{i,k}, ... S_FGPR_{N,k}) an einen entsprechenden Server (SRVᵢ) unter den N Servern (SRV₁, ... SRVᵢ, ... SRV_{N}), um sie dort zu speichern.

8. System zum gesicherten Zugreifen auf vertrauliche Daten, die verteilt und gesichert auf N Servern (SRV₁, ... SRVᵢ, ... SRV_{N}) gespeichert sind, durch eine Zugriffsvorrichtung (AUTH_STAT), wobei das System zum gesicherten Zugreifen die Zugriffsvorrichtung (AUTH_STAT) und die N Server (SRV₁, ... SRVᵢ, ... SRV_{N}) aufweist,
wobei die Zugriffsvorrichtung (AUTH_STAT) Folgendes aufweist:
eine elektronischen Schaltung zum Geheimnisteilen (SHR_C') einer angenäherten Kurzdarstellung (S_FGPRN'_{k'}) eines vertraulichen Datenelements, auf das ein Zugriff in N kurzen Teilen (S_FGPRN'_{1,k'}, S_FGPRN'_{2,k'}, ... S_FGPRN'_{i,k'}, ... S_FGPRN'_{N,k'}) gewünscht wird, mit einer Schwelle t, wobei mindestens t Teile erforderlich sind, um die angenäherte Kurzdarstellung (S_FGPRN'ₖ) wiederherzustellen,
einen Sender (XMIT'), ausgebildet zum Übertragen von jedem (S_FGPRN'_{i,k'}) dieser N kurzen Teile (S_FGPRN'_{1,k'}, S_FGPRN'_{2,k'}, ... S_FGPRN'_{i,k'}, ... S_FGPRN'_{N,k'}) an einen entsprechenden Server (SRVᵢ) unter den N Servern (SRV₁, ... SRVᵢ, ... SRV_{N}),
wobei die N Server (SRV₁, ... SRVᵢ, ... SRV_{N}) Schaltungen zum Berechnen (PROC₁, PROCᵢ, PROC_{N}) aufweisen, die ausgebildet sind zum Ausführen einer verteilten Berechnung der Teile der Abstände zwischen der angenäherten Kurzdarstellung (S_FGPRN'_{k'}) und jeder der K angenäherten Kurzdarstellungen (S_FGPRN₁, S_FGPRN₂, ... S_FGPRN_{K}), die verteilt auf den N Servern (SRV₁, ... SRVᵢ, ... SRV_{N}) gespeichert sind, wobei die K angenäherten Kurzdarstellungen K unterschiedlichen vertraulichen Daten entsprechen, die verteilt auf den N Servern gespeichert sind,
wobei jeder Server (SRVᵢ) einen Sender (XMITᵢ) aufweist, der ausgebildet ist zum Übertragen der Teile der vertraulichen Daten (FGPRN_{i,k1}, ... FGPRN_{i,kj}, ... FGPRN_{i,kp}) , die den Kurzdarstellungen (S_FGPRN_{i,k1}, ... S_FGPRN_{i,kj}, ... S_FGPRNₖₚ) entsprechen, bei denen der Abstand zur angenäherten Kurzdarstellung (S_FGPRN'_{k'}) kleiner als eine festgelegte Schwelle ist, an einen Empfänger (RCV) der Zugriffsvorrichtung (AUTH_STAT),
wobei die Zugriffsvorrichtung (AUTH_STAT) eine elektronischen Schaltung zum Erhalten (GEN_FGPRN) aufweist, die ausgebildet ist zum Erhalten der entsprechenden vertraulichen Daten (FGPRNₖ₁, ... FGPRNₖⱼ, ... FGPRNₖₚ) ausgehend von den empfangenen Teilen (FGPRN_{1,K1}, ... FGPRN_{1,kj}, ... FGPRN_{1,kp}, ...FGPRN_{2,k1}, ... FGPRN_{2,kj}, ... FGPRN_{2,kp}, ... FGPRN_{N,K1}, ... FGPRN_{N,kj}, ... FGPRN_{N,kp}) .

9. System zum gesicherten Zugreifen nach Anspruch 8, bei dem die K gemessenen Abstände K Hammingabstände sind.

10. System zum gesicherten Zugreifen nach einem der Ansprüche 8 oder 9, bei dem die vertraulichen Daten biometrische Daten sind.

11. Computerprogramm, das eine Reihe von Anweisungen aufweist, die, wenn sie von einem Prozessor ausgeführt werden, den Prozessor dazu bringen, ein Verfahren nach einem der Ansprüche 1 bis 6 umsetzen.

12. Computerlesbares nicht flüchtiges Speichermedium, das ein Computerprogramm nach Anspruch 11 speichert.

## Claims

1. Method of secure distributed storage, on N servers (SRV₁, ... SRVᵢ, ... SRV_{N}), of confidential data, the method comprising:
/a/ an obtaining (SENSE), by an electronic circuit for obtaining (BIO_SENSOR) of a recording device (ENR_STAT), of a piece of confidential data (FGPRNₖ),
/b/ an obtaining (EXTR), by an electronic circuit for extracting (EXTR_C) from the recording device (ENR_STAT), of an approximated short representation (S_FGPRNₖ) of the piece of confidential data (FGPRNₖ) from said piece of confidential data (FGPRNₖ),
/c/ an obtaining (SHR), by a secret sharing electronic circuit (SHR_C) from the recording device (ENR_STAT), of N parts (FGPRN_{1,k}, FGPRN_{2,k}, ... FGPRN_{i,k}, ... FGPRN_{N,k}) of the piece of confidential data (FGPRNₖ) with a threshold t such that at least t parts are necessary to reconstitute the piece of confidential data (FGPRNₖ), and of N short parts (S_FGPRN_{1,k}, S_FGPRN_{2,k}, ... S_FGPRN_{i,k}, ... S_FGPRN_{N,k}) of the approximated short representation (S_FGPRNₖ) with a threshold t such that at least t short parts are necessary to reconstitute the approximated short representation (S_FGPRNₖ),
/d/ a transmitting (TRN), by a transmitter (XMIT) from the recording device (ENR_STAT), of each one (FGPRN_{i,k}) of these N parts (FGPRN_{i,k}, FGPRN_{2,k}, ... FGPRN_{i,k}, ... FGPRN_{N,k}) and of each one (S_FGPRN_{i,k}) of these N short parts (S_FGPRN_{1,k}, S_FGPRN_{2,k}, ... S FGPRN_{i,k}, ... S_FGPRN_{N,k}) to a respective server (SRVᵢ) among the N servers (SRV₁, ... SRVᵢ, ... SRV_{N}), in order to store them therein.

2. Method for secure access, by a device for access (AUTH_STAT), to confidential data stored in a distributed and secure manner on N servers (SRV₁, ... SRVᵢ, ... SRV_{N}), the method comprising:
/e/ an obtaining (SHR'), by a secret sharing electronic circuit (SHR_C') from the device for access (AUTH_STAT), of N short parts (S-FGPRN'_{1,k'}, S_FGPRN'_{2,k'}, ... S_FGPRN'_{i,k'}, ... S_FGPRN'_{N,k'}) of an approximated short representation (S_FGPRN'_{k'}) of a piece of confidential data to which access is desired, with a threshold t such that at least t short parts are necessary to reconstitute the approximated short representation (S_FGPRN'ₖ),
/f/ a transmitting (TRN'), by a transmitter (XMIT') from the device for access (AUTH_STAT), of each one (S_FGPRN'_{i,k'}) of these N short parts (S_FGPRN'_{1,k'}, S_FGPRN'_{2,k'}, ... S_FGPRN'_{i,k'}, ... S_FGPRN'N_{,k'}) to a respective server (SRVᵢ) among the N servers (SRV₁, ... SRVᵢ, ... SRV_{N}),
/g/ a distributed computation (D_CALC), by computation circuits (PROC₁, ... PROCᵢ, ... PROC_{N}) of the N servers (SRV₁, ... SRVᵢ, ... SRV_{N}), of the parts of the distances between the approximated short representation (S_FGPRN'_{k'}) and each one of K approximated short representations (S_FGPRN₁, S_FGPRN₂, ... S_FGPRN_{K}) stored in a distributed manner on the N servers (SRV₁, ... SRVᵢ, ... SRV_{N}), with the K approximated short representations corresponding to K different confidential data stored in a distributed manner on the N servers,
/h/ a transmitting, by a transmitter (XMITᵢ) of each server (SRVᵢ) used, to a receiver (RCV) from the device for access (AUTH_STAT), of the parts of confidential data (FGPRN_{i,kl}, ... FGPRN_{i,kj}, ... FGPRN_{i,kp}) that correspond to the short representations (S_FGPRNₖ₁, ... S_FGPRNₖⱼ, ... S_FGPRNₖₚ) of which the distance to the approximated short representation (S_FGPRN'_{k'}) is less than a determined threshold,
/ij/ an obtaining (GEN_FGPRN), by an electronic circuit for obtaining (GEN_FGPRN_C) from the device for access (AUTH_STAT), from the parts received in the preceding step (FGPRN_{1,k1}, ... FGPRN_{1,kj}, ... FGPRN_{1,kp}, FGPRN_{2,k1}, ... FGPRN_{2,kj}, ... FGPRN_{2,kp}, FGPRN_{N,k1}, ... FGPRN_{N,kj}, ... FGPRN_{N,kp}), of the corresponding confidential data (FGPRNₖ₁, ... FGPRNₖⱼ, ... FGPRNₖₚ).

3. Method for secure access according to claim 2, wherein the distributed computation (D_CALC) comprises a determination (DET), by a computation circuit (PROCᵢ) of each server (SRVᵢ), of K distance parts measured between:
the short part (S_FGPRN'_{i,k'}), received by this server (SRVᵢ), of the piece of confidential data to which access is desired, and
K short parts (S_FGPRN_{i,1}, S_FGPRN_{i,2}, ... S_FGPRN_{i,K}) that this server (SRVᵢ) has stored beforehand,
corresponding to a determination of N*K distance parts,
and wherein the method measures the distance between the approximate short representation (S_FGPRN'_{k'}) of the piece of confidential data to which access is desired and a short representation (S_FGPRNⱼ) stored in a distributed manner on the N servers (SRV₁, SRVᵢ, SRV_{N}) by combining, among said N*K distance parts, the N distance parts measured respectively by each server (SRVᵢ) between:
the short part (S_FGPRN_{i,j}) of the short representation (S_FGPRNⱼ) stored on this server (SRVᵢ) and
the corresponding short part (S_FGPRN'_{i,k'}) of said approximated short representation received by this server (SRVᵢ).

4. Method for secure access according to claim 2, wherein the distributed computation (D_CALC) comprises a determination (DET), by a computation circuit (PROCᵢ) of each server (SRVᵢ), of K distance parts measured between:
the short part (S_FGPRN'_{i,k'}), received by this server (SRVᵢ), of the piece of confidential data to which access is desired, and
K short parts (S_FGPRN_{i,1}, S_FGPRN_{i,2}, ... S_FGPRN_{i,K}) that this server (SRVᵢ) has stored beforehand,
or a determination of N*K distance parts,
and wherein the method carries out a secure comparison between a threshold and the distance measured between the approximated short representation (S_FGPRN'_{k'}) of the piece of confidential data to which access is desired and a short representation (S_FGPRNⱼ) stored in a distributed manner on the N servers (SRV₁, SRVᵢ, SRV_{N}) by applying a distance computation secure protocol to N distance parts, among said N*K distance parts, said N distance parts being the distance parts measures respectively by each server (SRVᵢ) between:
the short part (S_FGPRN_{i,j}) of the short representation (S_FGPRNⱼ) stored on this server (SRVᵢ) and
the corresponding short part (S_FGPRN'_{i,k'}) of said approximated short representation received by this server (SRVᵢ).

5. Method for secure access according to one of claims 2 to 4, wherein the K distances measured are K Hamming distances.

6. Method for secure access according to one of claims 2 to 5, wherein the confidential data is biometric data.

7. Recording device (ENR_STAT) for secured distributed storage, on N servers (SRV₁, ... SRVᵢ, ... SRV_{N}), of confidential data, the recording device (ENR_STAT) comprising:
an electronic circuit for obtaining (BIO_SENSOR) a piece of confidential data (FGPRNₖ),
an electronic circuit for extracting (EXTR_C) an approximated short representation (S_FGPRNₖ) of the piece of confidential data (FGPRNₖ) from said piece of confidential data (FGPRNₖ),
a secret sharing electronic circuit (SHR_C) of the piece of confidential data (FGPRNₖ) in N parts (FGPRN_{1,k}, FGPRN_{2,k}, ... FGPRN_{i,k}, ... FGPRN_{N,k}) with a threshold t such that at least t parts are necessary to reconstitute the piece of confidential data (FGPRNₖ), and of the approximated short representation (S_FGPRNₖ) in N short parts (S_FGPRN_{1,k}, S_FGPRN_{2,k}, ... S_FGPRN_{i,k}, ... S_FGPRN_{N,k}) with a threshold t such that at least t short parts are necessary to reconstitute the approximated short representation (S_FGPRNₖ),
a transmitter (XMIT) arranged to transmit each one (FGPRN_{i,k}) of these N parts (FGPRN_{1,k}, FGPRN_{2,k}, ... FGPRN_{i,k}, ... FGPRN_{N,k}) and each one (S_FGPRN_{i,k}) of these N short parts (S_FGPRN_{1,k}, S_FGPRN_{2,k}, ... S_FGPRN_{i,k}, ... S_FGPRN_{N,k}) to a respective server (SRVᵢ) among the N servers (SRV₁, ... SRVᵢ, ... SRV_{N}), in order to store them therein.

8. System for secured access, by a device for access (AUTH_STAT), to confidential data stored in a distributed and secure manner on N servers (SRV₁, ... SRVᵢ, ... SRV_{N}), the system for secured access comprising the access device (AUTH_STAT) and the N servers (SRV₁, ... SRVᵢ, ... SRV_{N}),
with the access device (AUTH_STAT) comprising:
an electronic circuit for sharing (SHR_C') of an approximated short representation (S_FGPRN'_{k'}) of a piece of confidential data to which access is desired in N short parts (S_FGPRN'_{1,k}, S_FGPRN'_{2,k'}, ... S_FGPRN'_{i,k'}, ... S_FGPRN'_{N,k}), with a threshold t such that at least t short parts are necessary to reconstitute the approximated short representation (S_FGPRN'ₖ),
a transmitter (XMIT') arranged to transmit each one (S_FGPRN'_{i,k'}) of these N short parts (S_FGPRN'_{1,k'}, S_FGPRN'_{2,k'}, ... S_FGPRN'_{i,k'}, ... S_FGPRN'_{N,k'}) to a respective server (SRVᵢ) among the N servers (SRV₁, ... SRVᵢ, ... SRV_{N}),
with the N servers (SRV₁, ... SRVᵢ, ... SRV_{N}) comprising computational circuits (PROC₁, ... PROCᵢ, ... PROC_{N}) arranged to implement a distributed computation of the parts of the distances between the approximated short representation (S_FGPRN'_{k'}) and each one of K approximated short representations (S_FGPRN₁, S_FGPRN₂, S_FGPRN_{K}) stored in a distributed manner on the N servers (SRV₁, ... SRVᵢ, SRV_{N}), with the K approximated short representations corresponding to K different confidential data stored in a distributed manner on the N servers, each server (SRVᵢ) comprising a transmitter (XMITᵢ) arranged to transmit, to a receiver (RCV) from the device for access (AUTH_STAT), of the parts of confidential data FGPRN_{i,k1}, ... FGPRN_{i,kj}, ... FGPRN_{i,kp}) that correspond to the short representations (S_FGPRNₖ₁, ... S_FGPRNₖⱼ, ... S_FGPRNₖₚ) of which the distance with the approximated short representation (S_FGPRN'_{k'}) is less than a determined threshold, with the access device (AUTH_STAT) comprising an electronic circuit for obtaining (GEN_FGPRN) arranged to obtain, from the parts received (FGPRN_{1,k1}, ... FGPRN_{1,kj}, ... FGPRN_{1,kp}, FGPRN_{2,k1}, ... FGPRN_{2,kj}, ... FGPRN_{2,kp}, FGPRN_{N,k1}, ... FGPRN_{N,kj}, FGPRN_{N,kp}), corresponding confidential data (FGPRNₖ₁, FGPRNₖⱼ, ... FGPRNₖₚ).

9. System for secured access according to claim 8, wherein the K distances measured are K Hamming distances.

10. System for secured access according to one of claims 8 or 9, wherein the confidential data is biometric data.

11. Computer program comprising a series of instructions that, when they are executed by a processor, lead the processor to implement a method according to one of claims 1 to 6.

12. Non-transient storage medium that can be read by a computer, said medium storing a computer program according to claim 11.
